(19) Europäisches Patentamt
European Patent Office
Office européen des brevets

(11) EP 1 306 424 A1

(12) **EUROPEAN PATENT APPLICATION**
published in accordance with Art. 158(3) EPC

(43) Date of publication:
**02.05.2003 Bulletin 2003/18**

(21) Application number: **01955548.1**

(22) Date of filing: **01.08.2001**

(51) Int Cl.7: **C11D 3/04**, C11D 3/10, C11D 3/37, C11D 11/00, C08J 3/12, C08J 3/14, C08L 33/02

(86) International application number:
**PCT/JP01/06621**

(87) International publication number:
**WO 02/010324 (07.02.2002 Gazette 2002/06)**

(84) Designated Contracting States:
**AT BE CH CY DE DK ES FI FR GB GR IE IT LI LU MC NL PT SE TR**

(30) Priority: **01.08.2000 JP 2000233768**

(71) Applicant: **Kao Corporation**
**Tokyo 103-8210 (JP)**

(72) Inventors:
- **TAKANA, Shuji, Kao Corporation, Research Lab. Wakayama-shi, Wakayama 640-8580 (JP)**
- **YAMAGUCHI, Shu, Kao Corporation, Research Lab. Wakayama-shi, Wakayama 640-8580 (JP)**
- **NAKAMURA, Fumihiko, Kao Corporation, Research Lab. Wakayama-shi, Wakayama 640-8580 (JP)**
- **TANAKA, Shouji, Kao Corporation, Research Lab. Wakayama-shi, Wakayama 640-8580 (JP)**
- **YOSHIMURA, Tadanori, Kao Corporation, Research Lab Wakayama-shi, Wakayama 640-8580 (JP)**
- **TAKAYA, Hitoshi, Kao Corporation, Research Lab. Wakayama-shi, Wakayama 640-8580 (JP)**

(74) Representative: **HOFFMANN - EITLE**
**Patent- und Rechtsanwälte**
**Arabellastrasse 4**
**81925 München (DE)**

(54) **PROCESS FOR PRODUCING GRANULES FOR SURFACTANT SUPPORT**

(57) To provide particles for supporting a surfactant which are excellent in the supporting ability (supporting capacity/supporting strength) of the liquid surfactant composition and a process for preparing the same; detergent particles prepared by using the particles for supporting a surfactant; and a detergent composition comprising the detergent particles. According to the present invention, there are provided particles for supporting a surfactant having excellent supporting abilities (supporting capacity/supporting strength) of a surfactant composition; detergent particles having high quality and high deterging performance, and further having excellent hue; and a detergent composition comprising the detergent particles.

EP 1 306 424 A1

## Description

### TECHNICAL FIELD

The present invention relates to particles for supporting a surfactant, and a process for preparing the same. Further, the present invention relates to high-density detergent particles using the particles for supporting a surfactant, and a detergent composition.

### BACKGROUND ART

One process for obtaining a high-density detergent includes a process comprising the step of supporting a liquid surfactant in particles for supporting a surfactant. In this process, a high supporting ability of the liquid surfactant is demanded for the particles for supporting a surfactant. In other words, there are two factors for the supporting ability demanded for the particles for supporting a surfactant: A large amount of a liquid surfactant can be supported (supporting capacity); and the liquid surfactant once absorbed can be strongly supported in the inner portion of the particle without being bled out (supporting strength). The supporting capacity is important from the viewpoint of formulating a surfactant in an amount necessary for detergency performance, and the supporting strength is important from the viewpoints of preventing lowering the flowability of powdery detergent, caking, and migration of the liquid surfactant to a container or its surface by suppressing the bleed-out of the liquid surfactant.
As to the structure demanded for the particles for supporting a surfactant having a high supporting ability, it is desired to have a structure so that the supporting capacity is increased by having a sufficient microporous capacity in the inner portion of the particle, and that the supporting strength is high by having fine micropore diameter. Such a structure is obtained by constructing the particles for supporting a surfactant with fine particles such that the particles are in contact with one another, with maintaining a sufficient air gap therebetween. As a supplying source for the fine particles, a representative water-soluble salt usable for a detergent composition includes sodium carbonate. Sodium carbonate forms sodium carbonate monohydrate, or burkeite, which is a double salt with sodium sulfate, in a preparation liquid, and these compounds can form fine acicular crystals to serve as a base material for forming an effective supporting site in the inner portion of the particle for supporting a surfactant.
As a technique for actualizing such formation, Japanese Patent Laid-Open No. Sho 62-112697 discloses a process of obtaining a dry powder having a high adsorption capacity (particles for supporting a surfactant), comprising adding and mixing a crystal growth-controlling agent, which is an organic substance having at least 3 carboxyl groups in the molecule, in an effective amount, with a surfactant slurry, prior to mixing the slurry with sodium carbonate, thereby forming sodium carbonate monohydrate and/or burkeite, of which crystal growth is controlled, in the slurry; and thereafter spray-drying the mixture slurry.
However, the supporting ability of the particles for supporting a surfactant obtained by this process has not been sufficient. One of the causations therefor is that the amount of fine burkeite dispersed in the slurry before spray-drying is insufficient, so that the amount of the fine burkeite crystals is also insufficient in the particle obtained by spray-drying. The fine acicular burkeite crystals are a base material effective for improving the supporting ability. However, in this technique, since dissolved sodium sulfate forms burkeite on the surface or near the surface of granular sodium carbonate added afterwards, a majority exists as an aggregate which is hard and has a large particle size. Therefore, the amount of the burkeite in a fine acicular crystal state formed in the slurry is small, and the burkeite which could have been inherently formed into fine acicular crystals takes an aggregated state having a large particle size in the particle even after spray-drying. Therefore, the resulting particles have larger microporous capacity and micropore diameter, so that a sufficient supporting ability cannot be exhibited. In addition, another causation is in that there is little effect in precipitating burkeite as fine acicular crystals because the polycarboxylate. polymer is not a compound selected to be satisfactory as a crystal growth-controlling agent for the burkeite.

### DISCLOSURE OF INVENTION

Accordingly, an object of the present invention is to provide particles for supporting a surfactant which are excellent in the supporting ability (supporting capacity/supporting strength) of the liquid surfactant composition and a process for preparing the same; detergent particles prepared by using the particles for supporting a surfactant; and a detergent composition comprising the detergent particles.
Specifically, the present invention relates to:

[1] a process for preparing particles for supporting a surfactant comprising burkeite, comprising the step of spray-drying a preparation liquid comprising an acrylic polymer, sodium carbonate and sodium sulfate, wherein the acrylic polymer has a weight-average molecular weight of 3000 to 100000, and wherein acrylic polymer has a size distribution, as determined by light scattering determination, such that a particle size of a larger particle size side at which a height of a peak corresponding to a particle size range covering a particle size of 10 nm attenuates to a half of a maximum value is 32 nm or less, and that a proportion of particles having a particle size exceeding 800 nm is 70% or less;

[2] particles for supporting a surfactant obtainable by the process of item [1] above, wherein the particles for supporting a surfactant have a mode diameter of a microporous capacity distribution as determined by mercury porosimeter of 1.5 μm or less for one having a micropore diameter of from 0.01 to 3 μm, a microporous capacity of 0.3 mL/g or more for one having a micropore diameter of from 0.01 to 3 μm, and a particle strength of from 15 MPa or more;

[3] particles for supporting a surfactant comprising burkeite, wherein an acrylic polymer is contained in an amount of 5 to 30% by weight, wherein the acrylic polymer has a weight-average molecular weight of 3000 to 100000, and wherein acrylic polymer has a size distribution, as determined by light scattering determination, such that a particle size of a larger particle size side at which a height of a peak corresponding to a particle size range covering a particle size of 10 nm attenuates to a half of a maximum value is 32 nm or less, and that a proportion of particles having a particle size exceeding 800 nm is 70% or less, and wherein sodium carbonate and sodium sulfate are contained in a weight ratio of from 1/10 to 10/1, and wherein a total content of the sodium carbonate and sodium sulfate, as expressed by a weight ratio to the polymer content, of from 19/1 to 1/2;

[4] detergent particles comprising 10 to 100 parts by weight of a surfactant composition based on 100 parts by weight of particles for supporting a surfactant of item [2] or [3] above, wherein the surfactant composition is supported by the particles for supporting a surfactant; and

[5] a detergent composition having an average particle size of 150 to 500 μm and a bulk density of from 500 to 1000 g/L, comprising the detergent particles of item [4] above in an amount of 50 to 100% by weight.

## BRIEF DESCRIPTION OF THE DRAWINGS

Figure 1 is a schematic view of histograms of light scattering determination, wherein h is a height of a peak.

Figure 2 is a schematic view showing HPLC eluting pattern used for the determination of asymmetric coefficient (As) of an acrylate polymer, wherein Ve is an elution time and $W_{1/2}$ is a half width.

Figure 3 is a schematic view showing a calibration curve showing a relationship between logarithm of calcium ion concentration and voltage used in the determination of the calcium ion capturing ability of the acrylate polymer.

Figure 4 is a schematic view showing the relationship between the calcium ion concentration and a dropped amount A of a sample $CaCl_2$ solution used in the determination of the calcium ion capturing ability of the acrylate polymer.

## BEST MODE FOR CARRYING OUT THE INVENTION

1. Definitions of Terminology

The term "particle for supporting a surfactant" of the present invention refers to a particle obtainable by spray-drying a preparation liquid comprising an acrylic polymer, and sodium carbonate and sodium sulfate, the particle being used for supporting a surfactant composition, and an aggregate thereof is referred to as "particles for supporting a surfactant." The term "detergent particle" refers to a particle comprising a surfactant, a builder and the like, in which a surfactant composition is supported in the particle for supporting a surfactant, and the term "detergent particles" means an aggregate thereof. The term "detergent composition" means a composition comprising detergent particles, and further comprising separately added detergent components other than the detergent particles as desired (for instance, builder particles, fluorescent dyes, enzymes, perfumes, defoaming agents, bleaching agents, bleaching activators, and the like). The term "acrylic polymer" refers to a polymer and/or a copolymer, obtained by polymerization reaction of monomeric components containing acrylic acid and/or a salt thereof. The term "preparation liquid" means a solution or slurry to be subjected to spray-drying. In general, the term "burkeite" refers to a double salt constituted by sodium carbonate and sodium sulfate in a molar ratio of 1:2. However, the term "burkeite" in the present invention also covers a double salt constituted by sodium carbonate and sodium sulfate in a molar ratio other than that defined above. The term "water-soluble salt" refers to a compound of which solubility is 0.5 g /100 g or more to water at 25°C, and molecular weight is less than 1000. The term "water-soluble polymer" refers to an organic polymer of which solubility is 0.5 g /100 g or more to water at 25°C, and molecular weight is 1000 or more. The term "water-insoluble compound" refers to a solid of which solubility is less than 0.5 g / 100 g of water at 25°C. The term "surfactant composition" refers to a composition comprising a liquid and/or paste-like surfactant when supporting the surfactant in the particles for supporting a surfactant.

2. Improvements in Supporting Abilities, Particle Strength and Builder

Ability of Particles for Supporting Surfactant

The properties required for the particle for supporting a surfactant (hereinafter also referred to as "particle for supports") to exhibit high supporting abilities include having much space (supporting sites) for supporting a liquid and/or paste-like surfactant composition (hereinafter also referred to as "liquid composition") in the inner portion of the particle, namely having a large microporous capacity in the inner portion of the particle, thereby having a large supporting capacity for the liquid composition, and having a small micropore diameter in the inner portion of the particle, thereby having strong supporting strength for the liquid composition. In addition, it is necessary that the particles for supports have a particle strength durable when preparing a detergent particle for the operation such as mixing for supporting the liquid composition. Further, it is desired that the particles for supports have high builder ability along with high supporting abilities for the liquid composition, from the viewpoint of increasing the deterging performance of the detergent particles and the detergent composition. Here, the term "builder ability" means an ability of enhancing or increasing the deterging performance by the surfactant.

Therefore, studies have been made on the formation of a structure having many microfine spaces in the inner portion of the particle as described above by utilizing sodium carbonate, which is used as a representative builder in a detergent composition from the viewpoint of its action as an alkalizing agent showing a favorable pH buffer region in a washing liquid, and/or sodium sulfate, which is used as a representative builder in a detergent composition, from the viewpoint of increasing ion strength in the washing liquid, thereby favorably acting in sebum dirt stain washing and the like.

As a result, there has been found that by preparing a preparation liquid comprising an acrylic polymer having specified properties, and sodium carbonate and sodium sulfate, and spray-drying the preparation liquid, the particles for supports having microfine space in the inner portion of the particle as described above are obtained with forming fine crystals of burkeite, which is a double salt derived from sodium carbonate and sodium sulfate, precipitated in the particle.

Also, the acrylic polymer is a water-soluble polymer having an action of improving the deterging performance. Concretely, the acrylic polymer is a builder which has an action of dispersing solid particle stains such as dirt particles from laundry garment into a washtub, an action of preventing re-deposition of the solid particle stains onto laundry garment, and an action of capturing metal ions such as calcium ions which hinder the deterging action of the surfactant. Therefore, the particles for supports obtained by the use of the acrylic polymer having both the property of making the burkeite fine as mentioned above and the property of having an action for highly improving these deterging abilities have not only excellent supporting abilities for the surfactant composition but also excellent builder ability.

The phrase "acrylic polymer having specified properties" mentioned above refers to those having a property of making crystals of burkeite precipitated fine in the preparation step for the preparation liquid and the spray-drying step of the preparation liquid, and also having a high builder ability. Concretely, it is preferable that the acrylic polymer has a weight-average molecular weight of 3000 to 100000, as determined by the following weight-average molecular weight determination (1); and a particle size of the larger particle size side at which the height of the peak corresponding to a particle size range covering a particle size of 10 nm attenuates to a half of the maximum value of 32 nm or less and a proportion of particles having a particle size exceeding 800 nm of 70% or less, as determined by the following light-scattering determination (2); and optionally a dispersing ability of the dirt particles of 0.5 or more, as determined by the following dispersing ability determination (3); a calcium ion capturing ability of 160 mg $CaCO_3$/g or more, as determined by the following capturing ability determination (4); and a stability constant to calcium ions of 2.6 or more, as determined by the following stability constant determination (5).

The weight-average molecular weight determination (1), the light-scattering determination (2), the dispersing ability determination (3), the capturing ability determination (4), and the stability constant determination (5) will be described in detail hereinbelow together with preferred embodiments for each of the properties.

Weight-average molecular weight determination (1): The molecular weight determination of the acrylic polymer is performed as follows:

1. Standard substance for calculation: polyacrylic acid (AMERICAN STANDARDS CORP)
2. Eluent: 0.2 mol/L phosphate buffer/$CH_3CN$ : 9/1 (volume ratio)
3. Column: PWXL + G4000PWXL + G2500PWXL (manufactured by Tosoh Corporation)
4. Detector: RI
5. Sample concentration: 5 mg/mL
6. Injected amount: 0.1 mL
7. Temperature for determination: 40°C
8. Flow rate: 1.0 mL/min

The preferred range of the weight-average molecular weight of the acrylic polymer in the present invention is from 3000 to 100000. From the viewpoints of increasing the particle strength of the particles for supports by increasing the weight-average molecular weight and increasing the builder ability by adjusting the weight-average molecular weight, the weight-average molecular weight is more preferably from 3000 to 80000, still more preferably from 4000 to 60000, especially preferably from 5000 to 50000, most preferably from 6000 to 30000.

Light-scattering determination (2): A 8.0 g sample of the acrylic polymer having a solid ingredient of 40% by weight (hereinafter solid ingredient being expressed by %) is weighed and placed in a 50-mL sample tube, and diluted with 20 mL of ion-exchanged water. At this time, when the amount of the solid ingredient of the acrylic polymer sample differs from 40%, the amount of ion-exchanged water is adjusted so that the solid ingredient in the solution becomes the same. This aqueous solution is placed in a thermostat adjusted to 50°C, and with stirring, 1.0 g of sodium sulfate (anhydrous neutral sodium sulfate, manufactured by Shikoku Kasei K.K.) is added thereto, and subsequently 5.0 g of sodium carbonate (DENSE ASH, manufactured by Central Glass Co., Ltd.) is added thereto, and the components are dissolved. Thereafter, after keeping the solution at 50°C for 60 minutes, the solution is allowed to cool in the room at 25°C for 2 hours.

The above-mentioned sample is filtered with a 0.8 µm filter (manufactured by Millipore Corporation, SLAA025LS), and the residue is placed into a cell having an inner diameter of 12 mm. Having temperature-controlled to 25°C, a particle size determination is carried out by dynamic light-scattering method using "DLS-7000DH" manufactured by Otsuka Denshi K.K. With $Ar^+$ laser at a scattering angle of 90°, a light source of a wavelength of 488 nm and an output of 75 mW, the analysis is made by calculating the histogram by scattering intensity utilizing fitting according to Marquardt's method. In the histogram, as shown in Figure 1, the particle size is taken as axis of abscissa, and the proportion is taken as axis of ordinate.

Here, the spreading to the larger particle size side of the peak corresponding to 10 nm of the particle size distribution of the acrylic polymer determined by light scattering shows the extent of the association of the polymer molecules. Specifically, the larger the spreading to the larger particle size side, the more the polymer molecules are in an associated state, and the smaller the spreading to the larger particle size side, the more the polymer molecules are in a well dispersed state. Studies on the relationship between the spreading to the larger particle size side of the peak corresponding to 10 nm of the particle size distribution of the acrylic polymer and the action for crystal growth control for the burkeite have been made. As a result, it is considered that the smaller the spreading to the larger particle size side, the finer and the more acicular the burkeite precipitated in the preparation step and the spray-drying step of the preparation liquid.

The extent of the spreading to the larger particle size side of the peak corresponding to a particle size range covering a particle size of 10 nm in a particle size distribution of the acrylic polymer determined by dynamic light scattering of the acrylic polymer is defined herein by a particle size of the larger particle size side at which the height of the peak corresponding to a particle size range covering a particle size of 10 nm attenuates to a half of the maximum value (hereinafter referred to as "half-value particle size") (for instance, Figure 1). Specifically, the larger the half-value particle size, the larger the spreading to the larger particle size side, and the smaller the half-value particle size, the smaller the spreading to the larger particle size side.

Here, the preferable half-value particle size of the acrylic polymer in the present invention is 32 nm or less. From the viewpoint of making the burkeite fine by action on the crystals of the burkeite precipitated in the preparation step and the spray-drying step of the preparation liquid, the half-value particle size is more preferably 30 nm or less, still more preferably 28 nm or less, especially preferably 26 nm or less, most preferably 24 nm or less.

In addition, although this determination is carried out after the filtration of a sample solution with a 0.8 µm (800 nm) filter, a particle size exceeding 800 nm may be detected. This is presumably due to the fact that the acrylic polymers are associated. Studies on the relationship between the proportion of the particles having a particle size exceeding 800 nm and the absorbing property for the liquid composition of the particle for supporting a surfactant prepared by using the acrylic polymer have been made. As a result, it has been found that when those having a high proportion of particles having a particle size exceeding 800 nm are used, the absorbing property for the liquid composition of the particles for supports is lowered. Like in the increase in the half-value particle size mentioned above, it is considered that the proportion of particles having a particle size exceeding 800 nm shows the associating property of the acrylic polymer. Although there is some concern in the lowering of the action of crystal growth control, the acrylic polymer having a high proportion of particles having a particle size exceeding 800 nm has a high film-formation property, so that the property of the coating film formed on the surface of the particle for supporting a surfactant is less likely to permeate the liquid composition. Specifically, the acrylic polymer described above is thought to deteriorate the absorbing ability for the liquid composition of the particles for supporting a surfactant.

The proportion of particles having a particle size exceeding 800 nm of the acrylic polymer in the present invention is 70% or less. From the viewpoints of increasing the absorbing property for the liquid composition of the particles for supporting a surfactant, thereby increasing the supporting amount of the liquid composition of the particles for supports, the proportion of particles having a particle size exceeding 800 nm is preferably 60% or less, more preferably 50% or less, still more preferably 40% or less, most preferably 30% or less.

In addition, it is preferable that the acrylic polymer has the following elution patterns in the HPLC determination described below. The HPLC determination will be described below.

HPLC determination: A detection is made by a differential refractometer (Showa Denko, SE-71) at a sampling interval of 50 msec at a temperature for determination of 40°C, using a column manufactured by Tosoh Corporation, TSK Gel G2500pwxl, through which ion-exchanged water is allowed to flow at a rate of 0.5 mL every minute as a mobile phase. First, a 0.2% aqueous solution of glycerol (Special Grade, for instance, special reagent manufactured by Wako Pure Chemical Industries, Ltd.) is prepared, and an elution pattern of glycerol as a standard substance is determined by injecting a 50 µl sample into the above-mentioned column. This determination is taken twice. Next, a sample of acrylic polymer, the solid ingredient of which is previously adjusted to 40 ± 1%, is diluted 100 folds with ion-exchanged water to prepare a sample solution, and an elution pattern of the acrylic polymer is determined by injecting a 50 µl sample solution into the above-mentioned column. This determination is taken twice.

The difference in the elution patterns in the HPLC determination of the acrylic polymer can be confirmed by the relative half width as described below. First, as shown in Figure 1, a straight line is drawn from the base line to the base line, and a line perpendicular to the straight line is drawn from the point at which the height in the determined peak takes a maximum value, to obtain a half width. By denoting an average value of the half width for each of glycerol and acrylic polymer samples, each determined twice, as a half width ($A_1$) for glycerol and a half width ($A_2$) for acrylic polymer, a relative half width (B) is calculated by the following equation:

$$B = A_2/A_1$$

Here, the preferable relative half width of the elution pattern in the above-mentioned HPLC determination of the acrylic polymer in the present invention is 1.4 or more, more preferably 1.45 or more, still more preferably 1.5 or more, most preferably 1.55 or more.

In addition, it is preferable that the acrylic polymer has a high adsorption property in the adsorption ratio determination for burkeite in the following preparation liquid (hereinafter referred to as "adsorption ratio determination"). The adsorption ratio determination will be described below.

Adsorption ratio determination: The amount 558 g of ion-exchanged water (initially charged water) is weighed and placed in a 1-L stainless beaker, and agitated in a thermostat of which temperature is adjusted to 50°C, with rotating agitation impellers with 3 propeller wings of 2 × 4 cm at a speed of 200 r/min. To the ion-exchanged water is added 154 g of sodium sulfate (anhydrous neutral sodium sulfate, manufactured by Shikoku Kasei K.K.), and agitated for 10 minutes to dissolve it. Subsequently, 158 g of sodium carbonate (DENSE ASH, manufactured by Central Glass Co., Ltd.) is added thereto over a period of 15 seconds, and after another 5 seconds, 220 g of a sample of an aqueous solution of acrylic polymer, the solid ingredient of which is previously adjusted to 40%, is added thereto over a period of 30 seconds. After another 10 minutes, 51 g of sodium chloride (roast salt S, manufactured by Nippon Seien K.K.) is added to the mixture over a period of 5 seconds, and the agitation is continued for 60 minutes. Thereafter, a part of the preparation liquid under agitation, an about 100 g portion, is weighed and placed in a centrifugal precipitation tube, and the preparation liquid is centrifuged with a centrifuge (manufactured by Kokusan Enshinki K.K., Model H300) for 5 minutes at 10000 rpm, with keeping the temperature of 50°C.

A part of supernatant, a 3 g portion, is accurately weighed, and dried with a dryer (manufactured by Yamato, DP32) at 130°C for 10 hours, and the water content of the supernatant (solid ingredient) is quantified.

In addition, in order to quantify the inorganic ions dissolved in the supernatant, 3 g of the supernatant is accurately weighed, and the volumetric flask is filled to a volume of 100 ml, to give a solution for quantifying inorganic ions. A 5-ml solution is taken with a whole pipette, and the 100-ml volumetric flask is filled to a volume of 100 ml, to give a sample solution for determination of $CO_3^{2-}$ ions. Further, 3 ml is taken from this solution by a whole pipette, and the 50-ml volumetric flask is filled to a volume of 50 ml, to give a sample solution for determination of $Cl^-$ ions and $SO_4^{2-}$ ions. Here, the volumetric flask is filled with ion-exchanged water.

The quantification of each of the inorganic ions is performed by a calibration curve method using ion chromatography.

Determination Conditions (manufactured by Nippon DIONEX, SERIES 45001)

(Quantification of $CO_3^{2-}$ Ions)

Column: ICE-AS1

| | |
|---|---|
| Eluent: | 0.1 mM Aqueous solution containing octanesulfonic acid |
| Flow rate: | 1.0 mL/min. |
| Suppressor column: | AMMS-ICE |
| Removing solution: | 5 mM TBAOH, 50 mM aqueous solution containing boric acid |
| Detection: | Electric conductivity |
| Amount of sample injected: | 25 µL |

(Quantification of $Cl^-$ Ions and $SO_4^{2-}$ Ions)

| | |
|---|---|
| Column: | AS9-HC4 |
| Eluent: | 5 mM $NaHCO_3$, 12 mM aqueous solution containing $Na_2CO_3$ |
| Flow rate: | 1.0 mL/min. |
| Suppressor column: | AMMS-II |
| Removing solution: | 25 mN aqueous solution of sulfuric acid |
| Detection: | Electric conductivity |
| Amount of sample injected: | 25 µL |

The ion concentration (mg/L) of the supernatant is obtained, and the weights of $Na_2SO_4$, $Na_2CO_3$, and NaCl in 3 g of the supernatant are calculated.
On the other hand, the quantification of the acrylic polymer in the supernatant is performed by using a calibration curve according to gel permeation chromatography (GPC) method. As the sample solution, one used in the ion chromatography determination is used.

Determination Conditions

| | |
|---|---|
| Column: | G4000PWXL + G25000PWXL |
| Eluent: | 0.2 M Phosphate buffer/$CH_3CN$ = 9/1 (volume ratio) |
| Flow rate: | 1.0 mL/min. |
| Column temperature: | 40°C |
| Detector: | Differential refractometer |
| Amount of sample injected: | 100 µL |

Weights of $Na_2SO_4$, $Na_2CO_3$, NaCl and the acrylic polymer dissolved on the scale of the initially charged materials are obtained by conversion with a ratio of the weight of water in 3 g of the supernatant obtained by the above-mentioned drying process to the total weight of water in the preparation liquid (weight of initially charged water + weight of water of initially charged aqueous solution of acrylic polymer). Therefore, the weight of the precipitates and/or undissolved substances for each component (hereinafter referred to as "weight of precipitated substances") is calculated by the following equation.
Weight of Precipitated Substances = Initially Charged Weight - Dissolved Weight
In this preparation liquid, NaCl is entirely dissolved. In addition, when the dissolving weight exceeds the initially charged weight, it is considered as being entirely dissolved.
Here, when the weight of the precipitated substances for the acrylic polymer is denoted as A, the weight of the precipitated substances for $Na_2SO_4$ is denoted as B, and the weight of the precipitated substances for $Na_2CO_3$ is denoted as C, the adsorption ratio of the acrylic polymer to the burkeite is calculated by the following equation:

$$\text{Adsorption Ratio (\%)} = A / (B + C) \times 100$$

Here, the preferable adsorption ratio of the acrylic polymer to the burkeite in the present invention is 2.5% or more. In addition, from the viewpoint of making the burkeite precipitated finer by further action of the acrylic polymer to the crystals of the burkeite precipitated in the preparation step of the preparation liquid and the spray-drying step, the adsorption ratio is more preferably 3% or more, still more preferably 4% or more, especially preferably 5% or more, most preferably 6% or more. In addition, when a preparation liquid comprising an acrylic polymer is spray-dried, the resulting particle has a structure of being covered with a coating film comprising the polymer, so that the absorption of

the liquid composition from the surface of the particle tends to be delayed. By using the acrylic polymer having a high adsorption ratio to the burkeite mentioned above, it has been found that the absorbing property is improved.

Here, the fact that the adsorption ratio of the acrylic polymer to the burkeite as determined by the above-mentioned adsorption ratio determination is high means that the acrylic polymer has a strong interaction with the burkeite, namely the action for crystal growth control for the burkeite is strong. Therefore, when the acrylic polymer having a high adsorption ratio to the burkeite is used, the resulting particles for supports have a small micropore diameter, so that the particles for supports have high supporting abilities for the liquid composition and high particle strength. In addition, when the acrylic polymer having a high adsorption ratio to the burkeite is used, there can be confirmed a phenomenon in which fine crystals of the burkeite are precipitated in the preparation liquid prepared in the above-mentioned adsorption ratio determination.

As its method of confirmation, there can be used, for instance, the following in-line type particle monitoring system (manufactured by LASENTEC, "TSUB-TEC M100"). The method of confirmation will be exemplified below. A preparation liquid is prepared in the same stainless beaker as the above-mentioned adsorption ratio determination by following the same method and procedures. In this method, an in-line type particle monitoring system ("TSUB-TEC M100") is penetrated at an angle of 45° to the liquid surface of the standstill preparation liquid, and attached at a position 3 cm below the liquid surface. By the arrangement, particles are always collided to the window surface when stirred. Using "Control Interface for FBRM Ver. 5.4 Build 58b" (manufactured by LASENTEC) as a software, a focus position is set at a position on the inner side 0.02 mm from the window surface. The measurement duration (measurement time period for each run) is 14.5 seconds, and the averaging (moving average) is taken with 10 measurements to determine the number of counts (number of counts/sec) and the particle size distribution (code length distribution) are determined. The phenomenon in which the fine crystals of the burkeite are precipitated can be determined by comparing the determination value obtained at a point (a) immediately before adding sodium chloride with the determination value (b) at a point 60 minutes passed after the addition of sodium chloride. Specifically, the fact that the burkeite precipitated by the addition of sodium chloride is finer can be confirmed by an increase in the number of counts and/or a smaller average particle size of precipitated substances (median code: particle size when the cumulative number of particles is 50%). Here, the phrase "average particle size of the precipitated substances" refers to an average particle size calculated from the particle size distribution by subtracting the particle size distribution at a point (a) from the particle size distribution at a point (b).

From the viewpoint of increasing the supporting abilities of the particles for supports by using the acrylic polymer having an effect of forming fine burkeite in the preparation liquid, the acrylic polymer has the number of counts resulting from subtracting the number of counts at the above-mentioned point (a) from the number of counts at the above-mentioned point (b) of preferably 1000 counts/sec or more, more preferably 1250 counts/sec or more, still more preferably 1500 counts/sec or more, most preferably 1750 counts/sec or more. In addition, the acrylic polymer has an average particle size of the precipitated substances in the adsorption ratio determination of preferably 40 μm or less, more preferably 35 μm or less, still more preferably 30 μm or less, most preferably 27.5 μm or less.

The properties of the acrylic polymer as described above, specifically the half-value particle size and the proportion of particles having a larger particle size in the light scattering determination, the half width of the HPLC determination, and the adsorption ratio to the burkeite are ascribed to the kinds of the terminal group of the acrylic polymer and the structure of the main chain of the acrylic polymer.

As the terminal group, those having high polarity are desirable. For instance, those having sulfonate group are preferable. However, it cannot be generally determined, because sufficient performance may be exhibited with a terminal group having low polarity depending upon the structure of the main chain described below.

In addition, the structure of the main chain means the number of branching and the number of head-to-head or tail-to-tail structure. The smaller the randomness in these structures, the more preferable the polymer for the present invention. The polymer can be obtained by carrying out polymerization under mild conditions with carefully noting on the points described below.

The head-to-head or tail-to-tail structure is formed due to the lowering of the selectivity of the reaction site in the propagation during the polymerization. Therefore, it is desired that the temperature during the polymerization is lowered in order to suppress the randomness in the selectivity, in order to obtain a preferable polymer for the present invention. At this time, from the viewpoint of carrying out the polymerization at a relative low temperature, it is effective to carry out the polymerization according to the redox method. The polymerization according to the redox method can be carried out on the basis of the method described in *COMPREHENSIVE POLYMER SCIENCE,* Volume 3, Chain Polymerization Part 1, 123-139, PERGAMON PRESS, 1989, or Japanese Examined Patent Publication No. Hei 2-24283.

Since the branching is generated by abstracting hydrogen atom at α-position with a radical, it is important to suppress the activity of the radical in order to obtain a preferable polymer for the present invention. Concretely, it is desired that the temperature during the polymerization is lowered, or that the concentration of the initiator is lowered. From the viewpoint of lowering the polymerization temperature, it is also effective to carry out the polymerization according to the redox method. It is desired that the concentration of the initiator needs to be carefully handled such that the dropping is carried out at a low concentration, stirring is sufficiently carried out, and the like, so as not to have exceedingly high a concentration locally as well as entirely, and that the process design is carried out by taking into consideration that the concentration of the initiator does not become exceeding high momentarily at any of the stages in the reaction. From the viewpoint of not increasing the concentration of the radical, it is desired to employ an agitation method or process which would not cause a local or momentary increase in the temperature in the same manner as the concentration of the initiator. In addition, as the kind of the initiator, from the viewpoint of having a low abstracting ability for $\alpha$-hydrogen, an azo-based initiator is more preferable than a persulfate.

In addition, when the molecular weight becomes larger than desired by lowering the concentration of the initiator, it is effective to use a chain transfer agent in combination. The chain transfer agent include sulfurous acid, hypophosphorous acid, phosphorous acid, mercaptan-based chain transfer agents, and the like.

The number of the branching of the actually obtained acrylic polymer can be determined by the following method.

Determination method for branching coefficient: GPC equipped with triple detectors (differential refraction, viscosity, light scattering) is used for the determination, and the branching coefficient is calculated by Zimm-Stockmayer method. The procedures will be described in detail hereinbelow. The Zimm-Stockmayer method includes a method described in *Gel Permeation Chromatography* (Maruzen Publishing, 1976), 159-161, authored by Tsugio TAKEUCHI and Sadao MORI.

1. Conditions for GPC

Device: one manufactured by Viscotek, Model 300 TDA

Column: one manufactured by Tosoh Corporation, TSK gel G (4000, 2500) PWxl, temperature: 35°C, mobile phase: 0.05 mol/L $Na_2SO_4$/10% $CH_3CN$, flow rate: 0.8 mL/minute

2. Correction of Device: A 1.5 mg/mL solution (solvent being the same as the above-mentioned mobile phase) of standard polyethylene oxide (manufactured by Viscotek, PolyCAL (trade name) PEO 50K) is injected in an amount of 0.2 mL into the GPC column. Assuming that the refraction index of the solvent is 1.33, that the weight-average molecular weight is 51500, that the intrinsic viscosity is 0.621 (unit being $10^2$ $cm^3 \cdot g^{-1}$), and that dn/dc (increase in the refractive index) is 0.132, the device constant is calculated from the resulting chromatogram.

3. The amount 0.2 mL of a sample solution (solvent being the same as the above-mentioned mobile phase), the polymer concentration of which is 3 mg/mL, is injected into the column, and the weight-average molecular weight ($Mw_b$) and the intrinsic viscosity ($[\eta]_b$) of the sample are obtained from the resulting chromatogram. Here, the sample concentration is recalculated by assuming that the dn/dc of the sample is 0.148.

4. Assuming that the viscosity constant $\alpha$ of a linear polymer and K are 0.847 and $6.84 \times 10^{-5}$, respectively, $[\eta]_1$ (intrinsic viscosity of the linear polymer) corresponding to the sample is calculated by the following equation.

$$[\eta]_1 = K \cdot (Mw_b)^{\alpha}$$

Here, the viscosity constant of the linear polymer is a value calculated from the polymer of Experimental Example 1, assuming that the polymer of Experimental Example 1 set forth below is linear.

5. The branching parameter ($g_\eta$) of the branched polymer is calculated by the following equation, and a shrinkage factor ($g_{s,3}$) of the random branched polymer is calculated.

$$g_\eta = [\eta]_b/[\eta]_1$$

$$g_{s,3} = g_\eta^{0.75}$$

6. The number of the weight-average branching point (Bn) is calculated by the following equation:

$$g_{s,3} = \frac{6}{Bn}\left[(1/2)\,\frac{(2+Bn)^{1/2}}{Bn^{1/2}}\,\ln\frac{(2+Bn)^{1/2}+Bn^{1/2}}{(2+Bn)^{1/2}-Bn^{1/2}}-1\right]$$

7. The branching coefficient (λ) is calculated by the following equation.

$$\lambda = R \cdot Bn/Mw_b$$

wherein R is assumed to be 47000 (= molecular weight of monomer ÷ 2 × 1000). By defining as above, λ is defined as the number of weight-average branching point per 1000 carbon atoms in the main chain.

Here, the branching coefficient (λ) as determined by the above determination method of the acrylic polymer in the present invention is preferably 9 or less, more preferably 5 or less, still more preferably 2.5 or less.

Dispersing ability determination (3): First, a 5.0 × $10^{-4}$ % by weight aqueous solution of an acrylic polymer is prepared by using 0.02 M $NH_4Cl$-$NH_4OH$ buffer adjusted to pH 10 having water hardness of 71.2 mg $CaCO_3$/L (using calcium chloride). Next, 50 mL of the aqueous solution is placed in a 50-mL shaking tube (precipitation tube), and 0.05 g of Kanuma red clay for gardening having a size of 150 mesh (100 µm)-pass (for instance, one manufactured by Sakamoto Shoten) is added thereto. After vigorously shaking the mixture for 30 seconds, the mixture is subjected to a 5-minute ultrasonic irradiation. The shaking tube (precipitation tube) is allowed to stand for 2 hours under an environmental condition of 25°C, and thereafter the supernatant is taken from the location 3 cm beneath the liquid surface. The turbidity is evaluated by the absorbance at a wavelength of 575 nm by using a spectrophotometer, and the resulting value is defined as the dispersing ability of the dirt particles. Therefore, the larger the measurement value for the absorbance, the higher the dispersing ability of the dirt particles.

Here, the preferable dispersing ability for the acrylic polymer in the present invention is 0.5 or more. From the viewpoints of detaching the dirt particle stains from laundry garment, and evenly dispersing the dirt particle stains in a washtub, thereby preventing the dirt particles from being re-deposited on the laundry garment, the dispersing ability is more preferably 0.6 or more, still more preferably 0.7 or more, most preferably 0.8 or more.

Capturing ability determination (4): First, a voltage of a standard calcium ion solution is determined by using an ion analyzer (manufactured by Orion, Model 920A) equipped with a standard calcium ion electrode using 0.1 M $NH_4Cl$-$NH_4OH$ buffer (pH 10), and a calibration curve showing the relationship between the logarithm of the calcium ion concentration and the voltage as shown in Figure 3 is drawn. Next, 0.1 g of an acrylic polymer (calculated on solid ingredient) is weighed and placed in a 100-ml volumetric flask, and the volumetric flask is filled up with the above-mentioned buffer. Thereto is added dropwise from a burette a $CaCl_2$ solution (pH 10) equivalent to 20000 ppm (calculated as $CaCO_3$) (blank is also determined). The dropwise addition is carried by incrementing with a 0.1 to 0.2 ml portion of the $CaCl_2$ solution, and the voltage at each instance is read off. The calcium ion concentration for each voltage reading is obtained from the calibration curve of Figure 3. The calcium ion concentration corresponding to the dropped amount A of the sample in Figure 4 is the calcium ion capturing ability of the sample.

The calcium ion capturing ability shows how much acrylic polymer captures calcium ions in water which lower the activity of the surfactant. Therefore, the higher the calcium ion capturing ability, the more excellent the builder ability of the particles for supports which suppresses the lowering of the activity of the surfactant.

Here, the preferable calcium ion capturing ability of the acrylic polymer in the present invention is 160 mg $CaCO_3$/g or more. From the viewpoint of capturing even a larger amount of calcium ions existing in the washtub, thereby further exhibiting a high deterging performance, the calcium ion capturing ability is more preferably 180 mg $CaCO_3$/g or more, still more preferably
190 mg $CaCO_3$/g or more, most preferably 200 mg $CaCO_3$/g or more.

Stability constant determination (5): The stability constant is obtained by plugging in the numerical values obtained under the following determination conditions into the following equation:

1) Using $CaCl_2$ and 0.1 M $NH_4Cl$-$NH_4OH$ buffer (pH 10), calcium ion solutions at each concentrations of 0.001 mol/L, 0.002 mol/L, 0.003 mol/L, 0.004 mol/L, 0.005 mol/L, 0.006 mol/L, 0.007 mol/L, 0.008 mol/L, 0.009 mol/L, 0.01 mol/L are prepared. Each solution is supplied into a 100-ml beaker in an amount of 50 g.
2) Fifty milligrams of the acrylic polymer (calculated on the basis of solid ingredient) is supplied.
3) pH of the solution is adjusted to 10.
4) The amount 0.15 g of sodium chloride is added as a calcium ion electrode stabilizing agent.
5) The concentration of free calcium ions is determined by using the calcium ion electrode. Denoting that:

| | |
|---|---|
| Concentration of free calcium ions | [Ca], |
| Concentration of fixed calcium ions | [CaS], |
| Free chelating site | [S], |

(continued)

| | |
|---|---|
| Number of chelating site | [SO], and |
| Stabilization constant | [log K] |

[Ca] × [S] / [CaS] = 1/K and [S] = [SO] - [CaS], which consequently lead to [Ca] / [CaS] = 1 / ([SO] × [Ca]) + 1 / [SO] × 1/K. Therefore, by plotting [Ca] / [CaS] as an axis of ordinates and [Ca] as an axis of abscissas, [SO], K, log K can be calculated from the slope and the intercept.

The stability constant for the calcium ions shows an extent of lowering the calcium ion concentration in the washing water, and the extent of pulling off the calcium ions existing in the stains deposited on the laundry garment. Therefore, the higher the stability constant of the acrylic polymer, the more stronger the ability of pulling off the calcium ions from the stains deposited on the laundry garment, whereby the stains are made into a more easy-to-remove state. As described above, the higher the stability constant of the acrylic polymer, the more excellent the builder ability of the particles for supports.

Here, the preferable stability constant for the calcium ions of the acrylic polymer in the present invention is 2.6 or more. From the viewpoint of capturing even a larger amount of calcium ions existing in the washtub, thereby further exhibiting a high deterging performance, the stability constant is more preferably 2.7 or more, still more preferably 2.8 or more, especially preferably 2.9 or more, most preferably 3.0 or more.

Incidentally, the internal structure of the particle for supporting a surfactant of the present invention can be confirmed by using a mercury porosimeter as expressed by the microporous capacity distribution of the particles for supports. In the distribution of the microporous capacity per micropore diameter of the inner portion of the particle for supports as determined by mercury porosimeter (for instance, one manufactured by SHIMADZU CORPORATION, "Poresizer 9320") (hereinafter referred to as "microporous capacity distribution"), the larger the microporous capacity, the larger the supporting capacity for the liquid composition; the smaller the micropore diameter, the higher the ability of retaining a liquid composition once absorbed by capillary phenomenon (supporting strength). Therefore, in a case where the microporous capacity is even larger and a micropore diameter is even smaller, the supporting ability for the surfactant can be made high, thereby supporting a large amount of the liquid composition, and at the same time the bleed-out of the liquid composition can be suppressed. Therefore, the particles for supporting a surfactant of the present invention which are suitable for supporting the liquid composition have a mode diameter of the microporous capacity distribution (the micropore diameter having the largest microporous capacity in the obtained microporous capacity distribution) of preferably 1.5 μm or less, more preferably 1.3 μm or less, still more preferably 1.1 μm or less, especially preferably 1.0 μm or less, more especially preferably 0.9 μm or less, particularly preferably 0.8 μm or less. In addition, with regard to the microporous capacity of the particles for supporting a surfactant of the present invention, it is preferable that the microporous capacity of one having a micropore diameter of from 0.01 to 3.0 μm is 0.3 mL/g or more. It is more preferable that the microporous capacity of one having a micropore diameter of from 0.01 to 2.5 μm is 0.3 mL/g or more. It is still more preferable that the microporous capacity of one having a micropore diameter of from 0.01 to 2.0 μm is 0.3 mL/g or more. It is especially preferable that the microporous capacity of one having a micropore diameter of from 0.01 to 1.5 μm is 0.3 mL/g or more. It is particularly preferable that the microporous capacity of one having a micropore diameter of from 0.01 to 1.0 μm is 0.3 mL/g or more.

In addition, it has been found that by having a smaller microporous diameter of the particles for supports, namely the finer the crystals in the inner portion of the particle, the contacting points between the crystals are increased, so that the particle strength can be increased. The preferable particle strength of the particles for supports is 15 MPa or more, preferably 20 MPa or more, more preferably 25 MPa or more, still more preferably 30 MPa or more, from the viewpoint of preventing undesirable lowering of the supporting capacity caused by disintegration of the particle when the liquid surfactant composition is added to the particles, and the preferable particle strength is 100 MPa or less, more preferably 80 MPa or less, still more preferably 70 MPa or less, most preferably 60 MPa or less, from the viewpoint of securing the supporting capacity of the particles for supports.

In addition, when a quinone, for instance, p-methoxyphenol (hereinafter also referred to as methoquinone), which is generally used as a polymerization inhibitor in acrylic acid monomer raw materials used in the preparation of the acrylic polymer is contained in a preparation liquid, the particles for supporting a surfactant obtained by spray-drying may turn pinkish in coloring, thereby deteriorating the hue in some cases. From the viewpoint of improving the hue of the particles for supporting a surfactant obtained by spray-drying a preparation liquid, it is preferable that the quinone content is reduced when the acrylic polymer is formulated in the preparation liquid. Specifically, the acrylic polymer is preferably in the form of an aqueous solution having a quinone content of 6 ppm or less, more preferably 4 ppm or less, still more preferably 2 ppm or less, most preferably essentially consisting of no quinone (less than 1 ppm).

The method for reducing the amount of the quinone include a method comprising reducing the quinone content in the acrylic acid monomer raw materials during the preparation of the acrylic polymer. In addition, another method

comprises carrying out a treatment of adding an oxidizing agent such as hydrogen peroxide or sodium hypochlorite to an aqueous solution of the acrylic polymer, thereby oxidizing the quinone contained in the aqueous solution of the acrylic polymer, and the like. The preferable oxidation method includes a method comprising adjusting its pH to 10 or more, and treating with hydrogen peroxide in an amount of equimolar or more of the quinone. In this method, the method of addition of the oxidizing agent to be added or an aid for improving its effect (aqueous sodium hydroxide) may be carried out by any of continuous process or batch-like process.

The method for detecting a quinone is described below by taking methoquinone as an example.

The methoquinone content in the aqueous solution of the acrylic polymer is quantified by high-performance liquid chromatography under the following determination conditions.

Determination Conditions

Column: ODS column (for instance, one manufactured by Tosoh Corporation, TSK-GEL ODS-80TS (4.6 mmϕ × 250 mm)

Eluent: 0.02 M $KH_2PO_4$/acetonitrile = 80/20 (vol/vol) (pH being adjusted to 2.5 with phosphoric acid)

Determination: UV (210 nm)

Column temperature: 30°C

Flow rate: 1.0 ml/min.

Sample: An aqueous polymer solution (40%) is diluted 100 folds with ion-exchanged water or the eluent, and this sample is directly used for the determination.

3. Composition of Particles for Supporting Surfactant

The particles for supports of the present invention comprise an acrylic polymer, which is a water-soluble polymer, and sodium carbonate and sodium sulfate, which are water-soluble salts. The acrylic polymer and sodium carbonate and sodium sulfate are important for forming a supporting site for a liquid surfactant composition. In addition, the acrylic polymer has an action of imparting strength to the particle.

The acrylic polymer used in the particles for supports of the present invention is a homopolymer and/or a copolymer obtained by polymerization reaction of monomeric components comprising acrylic acid and/or a salt thereof. The acrylic polymer preferably has a weight-average molecular weight, a half-attenuated particle size by light scattering, and a proportion of particles having a particle size exceeding 800 nm, and further optionally has an ability of dispersing dirt particles, a calcium ion capturing ability and a stability constant for calcium ions within the ranges defined above. Here, the monomeric components contained in the acrylic polymer other than acrylic acid and/or a salt thereof are preferably any of water-soluble ethylenic unsaturated monomeric components exemplified by unsaturated monocarboxylic acids represented by methacrylic acid, α-hydroxyacrylic acid, crotonic acid and the like and salts thereof; unsaturated polycarboxylic acids represented by maleic acid, methylmaleic acid, fumaric acid, itaconic acid, aconitic acid and the like and salts thereof; unsaturated sulfonic acids represented by allylsulfonic acid, styrenesulfonic acid and the like and salts thereof; and the like. In the acrylic polymer, one or more kinds of the water-soluble ethylenic unsaturated monomeric components can be contained other than acrylic acid and a salt thereof.

From the viewpoint of acting on the burkeite crystals precipitated in the preparation step for the preparation liquid and the spray-drying step of the preparation liquid, thereby adjusting the burkeite crystals to a finer size, the acrylic polymer comprises the monomeric components other than acrylic acid and/or a salt thereof in an amount, as expressed in a molar ratio based on the amount of acrylic acid and/or a salt thereof, of preferably 1/2.5 or less, more preferably 1/3 or less, still more preferably 1/5 or less, especially preferably 1/10 or less, most preferably essentially consisting of acrylic acid and/or a salt thereof.

In addition, the content of the acrylic polymer in the particles for supporting a surfactant of the present invention is preferably from 5 to 30% by weight, more preferably from 6 to 28% by weight, still more preferably from 7 to 26% by weight, especially preferably from 8 to 24% by weight, most preferably from 10 to 22% by weight. Having the content within the above range, the supporting abilities for the liquid composition become high and the particle strength is satisfactory.

In addition, in the particles for supporting a surfactant of the present invention, there can be contained together with the acrylic polymer water-soluble polymers other than the polymer. The water-soluble polymers include carboxylate polymers other than the acrylic polymer. There can be used, for instance, polymers such as polyglyoxylates; cellulose derivatives such as carboxymethyl cellulose; and aminocarboxylic acid-based polymers such as polyaspartates can be used as ones having a metal ion capturing ability, a dispersibility and an ability of preventing re-deposition.

Other polymers include polyvinyl pyrrolidones (PVP), polyethylene glycols (PEG), polypropylene glycols

(PPG), and the like. The PVP is preferable as a dye-transfer inhibitor, and the PEG and the PPG having a molecular weight of from about 1000 to about 20000 are preferable, because the viscous characteristic of a paste which is generated by containing water of a powder detergent is improved.

The particles for supporting a surfactant of the present invention comprise sodium carbonate and sodium sulfate, which are water-soluble salts. Sodium carbonate and sodium sulfate are base materials for forming a supporting site for a liquid composition in the particles for supports. The size and shape of burkeite, which is a double salt of sodium carbonate and sodium sulfate precipitated during the preparation step for the preparation liquid and the step of spray-drying step of the preparation liquid, play important roles for increasing the supporting abilities of the particles for supports. Specifically, in order to improve the supporting abilities of the particles for supports, it is preferable that a large number of burkeite which is fine and acicular is generated in the inner portion of the particle for supports by the action of the acrylic polymer. From this viewpoint, a total content of sodium carbonate and sodium sulfate in the particles for supporting a surfactant is, as expressed by a weight ratio to the polymer content, preferably from 19/1 to 1/2, more preferably from 17/1 to 1/1, still more preferably from 15/1 to 2/1, especially preferably from 13/1 to 3/1, most preferably from 11/1 to 4/1. In addition, from the viewpoint of efficiently generating burkeite in the particles for supports, the content ratio of sodium carbonate to sodium sulfate in the particles for supporting a surfactant, on a weight ratio, is preferably from 1/10 to 10/1, more preferably from 1/8 to 8/1, still more preferably from 1/6 to 6/1, still more preferably from 1/4 to 4/1, especially preferably from 1/3 to 3/1, most preferably from 1/2 to 2/1.

The other water-soluble salts which can be contained in the particles for supporting a surfactant of the present invention include water-soluble inorganic salts having a carbonate group, a sulfate group, a hydrogencarbonate group, a sulfite group, a hydrogensulfate group, a phosphate group, and the like (for instance, alkali metal salts, ammonium salts, or amine salts). In addition, there may be included halides such as chlorides, bromides, iodides, and fluorides of an alkali metal (for instance, sodium or potassium) and an alkaline earth metal (for instance, calcium or magnesium).

Among them, potassium carbonate, potassium sulfate, sodium sulfite and potassium sulfite are preferable. Potassium carbonate is preferable as an alkalizing agent showing a suitable pH buffering region in a washing liquid, and sulfites have an effect of reducing hypochlorite ions contained in tap water, thereby preventing detergent components such as enzymes and perfumes from oxidation degradation by the hypochlorite ions.

Sodium tripolyphosphate can also be used as the water-soluble salt.

In addition, since halides of alkali metals, such as sodium chloride, effectively act on the formation of the supporting sites of the particles for supports, because they have an effect, when added to a preparation liquid comprising sodium carbonate and sodium sulfate, of dissolving themselves and in turn precipitating microcrystals of a double salt of sodium carbonate and sodium sulfate. Further, these halides of alkali metals also are especially important because they have an action of partially suppressing the formation of a surface coating film in the drying process, so that they have an action of increasing supporting rate for the liquid composition in the particles for supports.

The water-soluble salt which can be contained in the particles for supporting a surfactant of the present invention includes a water-soluble organic acid salt having a low molecular weight, for instance, carboxylates such as citrates and fumarates. In addition, from the viewpoint of the detergency, preferable ones include methyliminodiacetates, iminodisuccinates, ethylenediaminedisuccinates, taurine diacetates, hydroxyethyliminodiacetates, β-alanine diacetate, hydroxyiminodisuccinates, methylglycine diacetate, glutamic acid diacetate, asparagine diacetate, serine diacetate, and the like.

The total content of the water-soluble salts, including sodium carbonate and sodium sulfate, in the particles for supporting a surfactant is preferably from 20 to 95% by weight, more preferably from 25 to 90% by weight, still more preferably from 30 to 85% by weight, especially preferably from 35 to 80% by weight, most preferably from 40 to 75% by weight. Within these ranges, the particles for supports have a sufficiently high particle strength, and the ranges are also preferable from the viewpoint of the dissolubility of the detergent particles.

In addition, the particles for supporting a surfactant of the present invention can contain a water-insoluble substance. As the water-insoluble substance, there can be used crystalline aluminosilicates, amorphous aluminosilicates, silicon dioxides, hydrated silicate compounds, clay compounds such as perlite and bentonite, and the like. From the viewpoints of its contribution to support for the liquid surfactant composition and not promoting generation of undissolved remnants, and the like, the crystalline aluminosilicates and the amorphous aluminosilicates are preferable. In addition, the average particle size of the aluminosilicates is preferably from 0.1 to 10 μm, more preferably from 0.5 to 5 μm.

Preferable crystalline aluminosilicates include A-type zeolites (for instance, trade name: "TOYOBUILDER," manufactured by Tosoh Corporation; trade name: "Gosei Zeolite," manufactured by Nippon Builder K.K.; trade name: "VALFOR 100," manufactured by PQ CHEMICALS (Thailand) Ltd.; trade name "VEGOBOND" manufactured by CONDEA; trade name: "ZEOBUILDER," manufactured by ZEOBUILDER Ltd.; trade name: "VEGOBOND A," manufactured by OMAN CHEMICAL INDUSTRIES Ltd.; and trade name: "Zeolite," manufactured by THAI SILICATE CHEMICALS Ltd.), from the viewpoints of the metal ion capturing ability and the economic advantages. Here, the value of the oil-absorbing ability of A-type zeolite determined by the method according to JIS K 5101 is preferably from 40 to 50 mL/100 g. Besides the above, there are included P-type zeolite (for instance, trade names: "Doucil A24," "ZSE064" and the like; manufactured by Crosfield B.V.; oil-absorbing ability: 60 to 150 mL/100 g); and X-type zeolite (for instance, trade name: "Wessalith XD"; manufactured by Degussa-AG; oil-absorbing ability: 80 to 100 mL/100 g). A hybrid zeolite described in WO 98/42622 can be also included as preferable crystalline aluminosilicates.

In addition, amorphous aluminosilicates, amorphous silicas, and the like, which have a high oil-absorbing ability but a low metal ion capturing ability, can be used as the water-insoluble substances. Examples include amorphous aluminosilicates including those described in Japanese Patent Laid-Open No. Sho 62-191417, page 2, lower right column, line 19 to page 5, upper left column, line 17 (especially, the initial temperature being preferably within the range from 15° to 60°C); and those described in Japanese Patent Laid-Open No. Sho 62-191419, page 2, lower right column, line 20 to page 5, lower left column, line 11 (especially, the oil-absorbing amount being 170 mL/100 g); amorphous aluminosilicates (oil-absorbing ability: 285 mL/100 g) described in Japanese Patent Laid-Open No. Hei 9-132794, column 17, line 46 to column 18, line 38; Japanese Patent Laid-Open No. Hei 7-10526, column 3, line 3 to column 5, line 9; Japanese Patent Laid-Open No. Hei 6-227811, column 2, line 15 to column 5, line 2; Japanese Patent Laid-Open No. Hei 8-119622, column 2, line 18 to column 3, line 47, and the like. For instance, there can be used oil-absorbing carriers "TOKSIL NR" (manufactured by Tokuyama Soda Co., Ltd.; oil-absorbing ability: 210 to 270 mL/100 g); "FLOWRITE" (the same as above; oil-absorbing ability: 400 to 600 mL/100 g); "TIXOLEX 25" (manufactured by Kofran Chemical; oil-absorbing ability: 220 to 270 mL/100 g); "SILOPURE" (manufactured by Fuji Devison Co., Ltd.; oil-absorbing ability: 240 to 280 mL/100 g), and the like. Especially, as the oil-absorbing carriers, favorable are those described in Japanese Patent Laid-Open No. Hei 6-179899, column 12, line 12 to column 13, line 1, and column 17, line 34 to column 19, line 17.

The water-insoluble substance may be composed of a single component, or a plurality of components.

The content of the water-insoluble substance in the particles for supports, when the water-insoluble substance is contained therein, is preferably 49% by weight or less, more preferably 45% by weight or less, still more preferably 40% by weight or less, especially preferably 35% by weight or less, most preferably 30% by weight or less. Within these ranges, the particles for supporting a surfactant excellent in the particle strength and the dissolubility can be obtained.

As other components, a surfactant can be formulated in the particles for supports. However, in a case where the preparation liquid comprising a surfactant is spray-dried to give particles for supports, a coating film tends to be formed on the surface of the resulting particle for supports. Therefore, as a result, the absorption rate of the liquid surfactant composition to the particles for supports tends to be lowered. Therefore, from these viewpoints, the lower the content of the surfactant in the particles for supports the better, and it is preferable that the surfactant is rather not present. From the above reasons, the content of the surfactant in the particles for supports is preferably from 0 to 5% by weight, more preferably from 0 to 3% by weight, still more preferably from 0 to 2% by weight, especially preferably 0 to 1% by weight, most preferably substantially not contained.

As examples of the surfactant, the same ones as those for the liquid surfactant composition to be supported in the particles for supports described below can be used.

The amorphous silicates have an action of enhancing the particle strength of the particles for supports. In a case where the particles for supports comprise a water-insoluble substance such as an aluminosilicate, when the amorphous silicate is contained in the preparation liquid for preparing the particles for supports, aggregated lumpy masses are formed, which become hardly water-soluble with the passage of time. Therefore, it is preferable that the crystalline silicate is substantially not contained in the particles for supports of the present invention. In addition, since the crystalline silicate also dissolves in the preparation liquid to become amorphous, it is also preferable in the same manner as the amorphous silicate that the crystalline silicate is not contained in the preparation liquid. Also, in a case where an aluminosilicate is not used, when the silicate is formulated in the preparation liquid, there is exhibited a tendency of a lowered dissolution rate of the particles for supports obtained after spray-drying. Therefore, it is preferable that the amount of the silicate contained in the preparation liquid is 10% by weight or less, more preferably 5% by weight or less, still more preferably 3% by weight, especially preferably 2% by weight or less, more especially preferably 1% by weight or less, most preferably substantially not contained, based on the water-soluble salt excluding the silicate contained in the particles for supports.

In addition, the particles for supports can contain auxiliary components such as fluorescent dyes, pigments, dyes and enzymes. The content of the auxiliary components in the particles for supports is preferably 10% by weight or less, more preferably 5% by weight or less, especially preferably 2% by weight or less.

4. Process for Preparing Particles for Supporting Surfactant

The particles for supporting a surfactant of the present invention can be prepared by a process comprising the step (a) and the step (b) described below.

Step (a): preparing a preparation liquid comprising an acrylic polymer, and sodium carbonate and sodium sulfate as a first step; and

Step (b): spray-drying the preparation liquid of the step (a).

The step (b) is a step comprising drying the preparation liquid obtained in the step (a), to give particles for supporting a surfactant. As to the drying process, all sorts of drying processes, for instance, freeze-drying, drying under reduced pressure, and the like, can be employed. From the viewpoint of effectively acting on the precipitation of the finer burkeite for supporting the liquid composition, it is preferable that the preparation liquid is subjected to instant-drying, and an especially preferable drying process is a spray-drying process. As to the spray-drying tower, any of those forms of the countercurrent tower and cocurrent tower can be used, and the countercurrent tower is preferable from the viewpoint of productivity. In addition, as a heat source for the spray-drying tower, a pulse-shock wave dryer using a pulse combustor may be exemplified as one of preferable drying apparatus. In the pulse-shock wave dryer, since the droplets of the preparation liquid subjected to drying are dried in combustion gas at a high temperature along with shock waves, the drying speed of the droplets is accelerated. One example of the pulse-shock wave dryer includes PULCON (manufactured by Osaka Fuji Kogyo Kabushiki Kaisha).

The step (a) will be described in detail below.

4-1. Generation of Fine Burkeite in Preparation Liquid, Formation of Fine Particles by Addition and Pulverization

The step (a) is a step comprising preparing a preparation liquid comprising an acrylic polymer, and sodium carbonate and sodium sulfate. From the viewpoint of precipitating a larger amount of fine burkeite in the spray-drying step, thereby further improving the supporting abilities of the particles for supporting a surfactant, it is preferable that the step (a) includes at least one of the steps of (I) to (III), the steps of precipitating fine burkeite described below, and/or the step (IV), the step of adding fine burkeite to a preparation liquid and/or the step (V), the step of pulverizing burkeite in the preparation liquid. Here, each of the steps (I) to (III) is a step comprising precipitating fine burkeite from sodium carbonate and sodium sulfate dissolved in the preparation liquid. The burkeite precipitated in each of the steps is generated from a liquid phase of the preparation liquid, in which the fine particles are generated by the action of the acrylic polymer. In addition, the step (IV) exhibits the same effects as the case where the fine burkeite is precipitated in the preparation liquid by the addition of the fine burkeite to the preparation liquid. In addition, the step (V) comprises making finer coarse burkeite, for instance, burkeite or the like generated by using sodium carbonate particles as a core, in the preparation liquid by pulverization, or further making the fine burkeite finer.

The preparation liquid before subjecting to the steps (I) to (V) is prepared by a known process, and the acrylic polymer, and sodium carbonate and sodium sulfate may be formulated in any order. When the formulated sodium carbonate and sodium sulfate would not be completely dissolved in the preparation liquid, it is preferable that sodium sulfate is formulated before the formulation of sodium carbonate, from the viewpoint of efficiently generating the burkeite. In addition, when the crystal-precipitating agent described below and the fine burkeite are formulated, it is preferable that the crystal-precipitating agent is formulated after the formulation of the acrylic polymer, and sodium carbonate and sodium sulfate. When the water-insoluble substance is formulated, the water-insoluble substance may be formulated before the precipitation, the addition and the pulverization of the fine burkeite, from the viewpoint of suppressing the elevation of the viscosity of the preparation liquid caused by the precipitation, the addition and the pulverization of the burkeite, and the water-insoluble substance may be formulated afterwards, from the viewpoint of increasing the production efficiency of the preparation liquid.

The steps (I) to (V) of the step (a) will be described.

4-1-1. Step (I) Precipitation with Crystal-Precipitating Agent

The process for precipitating fine burkeite in a preparation liquid has been studied. As a result, a process of precipitation with a crystal-precipitating agent has been found. Specifically, by adding to the preparation liquid a crystal-precipitating agent having an effect of precipitating fine burkeite dissolved in the solution of the preparation liquid, the fine burkeite can be precipitated from sodium carbonate and sodium sulfate dissolved in the preparation liquid. The precipitation method with the crystal-precipitating agent will be described in further detail.

The crystal-precipitating agent refers to a substance other than sodium carbonate and sodium sulfate contained in the preparation liquid before the addition of the precipitating agent, the crystal-precipitating agent having an effect of precipitating the burkeite by its addition to the preparation liquid.

First, in a case where the crystal-precipitating agent is a water-soluble substance, an embodiment where a preparation liquid comprises sodium carbonate and sodium sulfate before the addition of the crystal-precipitating agent is described. In this embodiment, the crystal-precipitating agent is a substance having a dissolving strength greater than a dissolving strength of the burkeite, which is a double salt of sodium carbonate and sodium sulfate, at a temperature in which the precipitating agent is added. The term "dissolving strength" as referred herein means an extent of easiness in dissolving. A substance which can be used as a crystal-precipitating agent can be obtained by the following method. For instance, when sodium chloride is added to a saturated solution containing an acrylic polymer, and sodium carbonate and sodium sulfate, sodium chloride is dissolved and fine acicular crystals of burkeite, a double salt of sodium carbonate and sodium sulfate, are precipitated without being aggregated. In this case, sodium chloride is a preferable crystal-precipitating agent against the preparation liquid comprising sodium carbonate and sodium sulfate.

The burkeite precipitated in the preparation liquid with the crystal-precipitating agent is very fine. The size of the crystals precipitated in the preparation liquid can be determined by using the in-line type particle monitoring system (manufactured by LASENTEC, "TSUB-TEC M100") mentioned above.

In addition, the effect of precipitating fine crystals with the crystal-precipitating agent can be confirmed as an increase in the number of particles with the passage of time which is observed after the addition of the precipitating agent by the in-line type particle monitoring system.

The method for confirming the effect of precipitating fine crystals with the crystal-precipitating agent will be exemplified.

First, a saturated solution containing both sodium sulfate and sodium carbonate is prepared by the following method. Four-hundred grams of sodium sulfate (anhydrous neutral sodium sulfate, manufactured by Shikoku Kasei K.K.) is added to 1500 g of ion-exchanged water, which is adjusted to the preparation temperature of the preparation liquid. The mixture is sufficiently stirred for 20 minutes in a thermostat of which temperature is adjusted to the preparation temperature of the preparation liquid to dissolve the sodium sulfate. Further, 400 g of sodium carbonate ("DENSE ASH" manufactured by Central Glass Co., Ltd.) is added thereto, and the mixture is stirred for 30 minutes, to give a suspension. A saturated solution of sodium sulfate/sodium carbonate is prepared by a method of collecting supernatant after allowing the suspension to stand, or by a method of filtrating the suspension. Here, the term "the preparation temperature of the preparation liquid" refers to any temperature within the temperature range of from 30° to 80°C.

One-thousand grams of the saturated solution of sodium sulfate/sodium carbonate prepared by any of the above methods is weighed and placed in a 1-L stainless beaker, and stirred in a thermostat of which temperature is adjusted to the preparation temperature of the slurry or the like with rotating agitation impellers with 3 propeller wings of 2 $\times$ 4 cm at a speed of 200 r/min. A 100 g test sample is added within 30 seconds, and proceeded with 60-minute stirring. When the burkeite crystals are precipitated after 60 minutes, the test sample is a crystal-precipitating agent against sodium carbonate and sodium sulfate. Here, the precipitate is identified by analyzing with X-ray diffraction, elemental analysis, and the like.

The crystal-precipitating agent includes, for instance, salts having high dissolving strength such as halides including chlorides, bromides, iodides and fluorides of sodium, potassium, calcium and magnesium. In addition, there may be also included, as the crystal-precipitating agent, solvents which are compatible with water such as ethanol, methanol, and acetone; and substances having a large hydration force, such as zeolite (anhydride) among the water-insoluble substances.

From the viewpoint of the dissolving strength, the bromides and iodides are preferable, and from the viewpoint of the storage stability of the detergent particles, the chlorides are preferable. Also, from the viewpoint of the influence on the deterging performance, the alkali metal salts are preferable. Among them, from the economical viewpoint, sodium chloride is especially preferable.

The content of the crystal-precipitating agent in the particles for supporting a surfactant is preferably from 0.2 to 35% by weight, more preferably from 0.5 to 30% by weight, still more preferably from 1 to 25% by weight, particularly preferably from 1.5 to 20% by weight, especially preferably from 2 to 15% by weight, from the viewpoint of exhibiting a sufficient crystal-precipitating effect and the viewpoint of maintaining the deterging performance when used as a detergent composition.

In addition, it is preferable that as to the dissolution rate of the water-soluble crystal-precipitating agent in the preparation liquid, the higher the dissolution rate, the better, from the viewpoint of largely dissolving in the solution portion of the preparation liquid, thereby generating a large amount of precipitates in the preparation liquid, so as to have a more preferable structure for a supporting site in the particles for supports obtainable after spray-drying to the liquid composition. The dissolution rate of the crystal-precipitating agent is preferably 75% by weight or more, more preferably 80% by weight or more, still more preferably 85% by weight or more, especially preferably 90% by weight or more, more especially preferably 95% by weight or more, most preferably being completely dissolved.

The dissolution rate of the crystal-precipitating agent in the preparation liquid can be determined by combining known analyzing means. For instance, the preparation liquid is filtered under reduced pressure, and thereafter the water concentration $P_1$ (%) in the filtrate is measured with a far-infrared ray heater-type moisture meter (manufactured by SHIMADZU CORPORATION) or the like. Further, the concentration of the crystal-precipitating agent $S_1$ (%) in the filtrate is determined by ion chromatography or the like. Supposing that the water content of the preparation liquid is $Q_1$ (%) and the content of the crystal-precipitating agent in the preparation liquid is $T_1$ (%), the dissolution rate of the crystal-precipitating agent is calculated by the following equation, with proviso that when the above dissolution rate

calculated exceeds 100%, the dissolution rate is considered as 100%.

$$\text{Dissolution Rate (\%)} = \frac{(100 \times S_1 \times Q_1)}{(P_1 \times T_1)} \quad (1)$$

As to the order of the formulation of sodium carbonate and sodium sulfate to the preparation liquid, it is preferable that sodium carbonate is added after sufficiently dissolving sodium sulfate, from the viewpoint of increasing the supporting abilities of the particles for supports.

The water content of the preparation liquid is more preferably from 35 to 65% by weight, most preferably from 40 to 60% by weight, from the viewpoints of reducing coarse burkeite particles having an average particle size of 40 µm or more which are generated by using sodium carbonate particles as a core and sufficiently exhibiting the effect of the crystal-precipitating agent. The temperature of the preparation liquid is preferably from 30° to 80°C, more preferably from 35° to 75°C, from the viewpoints of the dissolved amount of the water-soluble salts and the liquid conveyability with a pump.

The process for preparation of the preparation liquid of this embodiment includes, for instance, initially adding all or substantially all of water to be formulated to a mixing vessel, and sequentially adding other components, preferably after the water temperature almost reaches a set temperature. A preferable order of addition is such that liquid components and sodium sulfate, sodium carbonate, and the like are initially added. In addition, small amounts of auxiliary components such as water-insoluble substances, such as zeolite, and dyes can be also added. The crystal-precipitating agent is added when the solution portion of the preparation liquid is saturated, or the crystal-precipitating agent is further added at the point where the solution portion of the preparation liquid becomes saturated by dissolving the crystal-precipitating agent. The water-insoluble substance may be added before the addition, after the addition, or in divided portions before and after the addition of the crystal-precipitating agent. In order to finally obtain a uniform preparation liquid, after the addition of the entire components to the preparation liquid, the mixture is mixed for preferably 10 minutes or more, more preferably 20 minutes or more, still more preferably 30 minutes or more.

4-1-2. Step (II) Precipitation by Means of Concentration of Preparation Liquid

The process for precipitating fine burkeite has been studied. As a result, a process of precipitating by means of concentrating the preparation liquid has been found. Specifically, a large number of the fine crystals can be generated in the preparation liquid by carrying out the operation of precipitation of burkeite by means of concentration of sodium carbonate and sodium sulfate in a dissolved state in the presence of the acrylic polymer. The method of precipitation by means of concentration of the preparation liquid will be described in further detail.

First, the preparation liquid before concentration may be prepared by a known process, and the acrylic polymer, and sodium carbonate and sodium sulfate may be formulated in any order. In addition, in a case where sodium carbonate and sodium sulfate in the preparation liquid would not be completely dissolved, it is preferable that sodium sulfate is formulated before the formulation of sodium carbonate. When the crystal-precipitating agent mentioned above is formulated, it is preferable that the crystal-precipitating agent is formulated after the formulation of the acrylic polymer, and sodium carbonate and sodium sulfate, or the crystal-precipitating agent may be formulated after subjecting the preparation liquid to a concentration operation. In addition, in a case where a water-insoluble substance is formulated, the water-insoluble substance may be formulated before concentration of the preparation liquid, or it may be formulated afterwards.

The smaller the amount of the coarse burkeite existing in the preparation liquid before concentration (with proviso that when the crystal-precipitating agent is formulated, the preparation liquid before its formulation), the higher the supporting abilities of the particles for supports obtainable after spray-drying. Therefore, the total dissolution rate of sodium carbonate and sodium sulfate in the preparation liquid before the concentration is preferably from 50 to 100% by weight, more preferably from 70 to 100% by weight, especially preferably from 90 to 100% by weight. When the dissolution rate does not reach 100% by weight, there is a preferable embodiment where the undissolved substances are made finer by pulverizing the preparation liquid by using the subsequently described wet pulverization device or the like. The wet pulverization of the preparation liquid may be carried out to a concentrated slurry. Here, the total dissolution rate of sodium carbonate and sodium sulfate is determined by the following method.

The total content $T_2$ (%) of sodium carbonate and sodium sulfate in the preparation liquid can be determined by ion chromatography or the like. In addition, the preparation liquid is filtered under reduced pressure, and thereafter the water concentration $P_2$ (%) in the filtrate is measured with a far-infrared ray heater-type moisture meter (manufactured by SHIMADZU CORPORATION) or the like. Further, the total concentration $S_2$ (%) of sodium carbonate and sodium sulfate in the filtrate is determined by ion chromatography or the like. Supposing that the water content of the preparation liquid is $Q_2$ (%) and the total content of sodium carbonate and sodium sulfate in the preparation liquid is

$T_2$ (%), the total dissolution rate of sodium carbonate and sodium sulfate is calculated by the following equation, with proviso that when the above dissolution rate calculated exceeds 100%, the dissolution rate is considered as 100%.

$$\text{Dissolution Rate (\%)} = \frac{(100 \times S_2 \times Q_2)}{(P_2 \times T_2)} \qquad (2)$$

Next, the water-soluble salts dissolved in the preparation liquid are precipitated by concentrating the preparation liquid. As a device for concentration, it may be any sorts of concentrators which are widely used. For instance, a natural circulation evaporator in which a liquid naturally circulates by rising with boiling within a heating tube in the inner portion of the evaporator by being collected to a central concentrate-trapping tube, and dropping; a forced circulation evaporator with external heating in which a liquid is circulated at a high speed between an evaporator and a heater with a circulation pump, and water is evaporated with an evaporator; and a falling thin-film evaporator in which a liquid is allowed to flow into the evaporator from a top of a vertical heater, and subjected to evaporation and concentration by forming uniform liquid film on the inner wall of the heater during falling. These evaporators may be used alone or together for multiple effects. A flash evaporating device in which water is evaporated by ejecting a liquid heated to a temperature of a boiling point or higher in the evaporator under reduced pressure is also effective.

Since the preparation liquid used in the present invention produces crystals of the water-soluble salts along with the concentration, the scales are likely to deposit inside the concentrator. Therefore, it is more preferable to use a concentrator having a function that can remove the deposited scales, or a concentrator having a structure in which scales are less likely to deposit. A former device includes a device in which the above-described falling thin-film evaporator is equipped with agitation impellers for scraping off the scales, for instance, Wiplen (manufactured by Shinko Pantec Co., Ltd.). A latter device includes Losco evaporator (manufactured by SUMITOMO HEAVY INDUSTRIES, LTD.) which comprises a plate-type heating element in the inner portion of the evaporator, in which concentration is carried out by allowing a liquid to flow on a surface of this heating element under reduced pressure.

4-1-3. Step (III) Precipitation by Temperature Adjustment of Preparation Liquid

The process for precipitating the fine burkeite has been studied. As a result, a process of changing the temperature of the preparation liquid so as to lower the dissolved amount of sodium carbonate and sodium sulfate has been found. Specifically, a large number of the fine burkeite can be generated in the preparation liquid by temperature-adjustment of the preparation liquid so as to lower the dissolved amount of sodium carbonate and sodium sulfate in the preparation liquid, thereby allowing sodium carbonate and sodium sulfate in a dissolved state to precipitate in the presence of an acrylic polymer. The method of precipitation by temperature-adjustment of the preparation liquid will be described in further detail.

First, the preparation liquid before the temperature-changing operation may be prepared by a known process. When the crystal-precipitating agent described above is formulated, it is preferable that the crystal-precipitating agent is formulated after the formulation of the acrylic polymer, and sodium carbonate and sodium sulfate, and that the crystal-precipitating agent may be formulated after the temperature-changing operation of the preparation liquid. Also, when a water-insoluble substance is formulated, the water-insoluble substance may be formulated before the temperature-changing operation of the preparation liquid, or after the temperature-changing operation. In addition, a part of the acrylic polymer may be formulated in the preparation liquid after the above operation. By the formulation, the size of the crystals of the precipitated water-soluble salts can be also adjusted.

The smaller the amount of the coarse burkeite existing in the preparation liquid before the temperature-changing operation, the higher the supporting abilities of the resulting particles for supporting a surfactant. Therefore, the total dissolution rate of sodium carbonate and sodium sulfate in the preparation liquid before the temperature-changing operation is preferably from 50 to 100% by weight, more preferably from 70 to 100% by weight, especially preferably from 90 to 100% by weight. When the dissolution rate does not reach 100% by weight, there is a preferable embodiment where the coarse burkeite is made finer by pulverizing the preparation liquid by using the subsequently described wet pulverization device or the like. The wet pulverization of the preparation liquid may be carried out to the preparation liquid after the temperature-changing operation. Here, the total dissolution rate of sodium carbonate and sodium sulfate is determined by the method described above.

Next, a part of the dissolved sodium carbonate and sodium sulfate is precipitated as burkeite by changing the temperature of the preparation liquid. A process of changing the temperature of the preparation liquid includes a process of heating or cooling the preparation liquid by using a device equipped with an external jacket, an internal coil, or the like when preparing the preparation liquid, or the like.

It is preferable that the temperature of the preparation liquid before the temperature-changing operation is set so that the dissolution rate of sodium carbonate and sodium sulfate contained in the preparation liquid is high.

The temperature of the preparation liquid after the temperature-changing operation is set so that the dissolution rate of sodium carbonate and sodium sulfate in the preparation liquid is lowered. Since sodium carbonate and sodium sulfate show the maximal amount dissolved at 30° to 40°C, when these raw materials are used, it is preferable that the preparation liquid before the temperature-changing operation is adjusted to 40°C or so, and that the temperature of the preparation liquid after the temperature-changing operation is adjusted to 50° to 70°C.

Here, there is also a preferable embodiment in which the precipitation of the dissolved water-soluble salts is accelerated, for example, by subjecting the preparation liquid to flash concentration together with changing the temperature of the preparation liquid.

4-1-4. Step (IV) Addition of Fine Burkeite Particles to Preparation Liquid

A method for exhibiting the same effect as in the case where the fine burkeite is precipitated in the preparation liquid has been studied. As a result, a method of adding the fine particles of burkeite to the preparation liquid has been found.

The preparation liquid before adding the fine particles is prepared by a known process, and the acrylic polymer, and sodium carbonate and sodium sulfate may be formulated in any order. When sodium carbonate and sodium sulfate would not be completely dissolved in the preparation liquid, it is preferable that sodium sulfate is formulated before the formulation of sodium carbonate. When the crystal-precipitating agent mentioned above is formulated, it is preferable that the crystal-precipitating agent is formulated after the formulation of the acrylic polymer, and sodium carbonate and sodium sulfate. When the water-insoluble substance is formulated, the water-insoluble substance may be formulated before addition of the fine particles of burkeite to the preparation liquid, or it may be formulated afterwards.

As the process for preparing fine particles of burkeite, there may be considered a process comprising finely pulverizing the fine particles which are commercially available. It is more preferable that the fine particles are formed into fine crystals in the presence of the water-soluble polymer. Concretely, sodium carbonate and sodium sulfate are dissolved in water together with the acrylic polymer, and crystallized by means of spray-drying or the like, and made fine by a pulverizer, to give fine particles of burkeite. The fine pulverizers include roller mills, ball-mills, collision-type pulverizers, and the like. The roller mills include USV mill (manufactured by Ube Industries, Ltd.), MRS mill (manufactured by Mitsubishi Heavy Industries, Ltd.), SH mill (manufactured by IHI), and the like; the ball-mills include Dynamic Mill (manufactured by Mitsui Miike Machinery Co., Ltd.), Vibration Mill (manufactured by Chuo Kakoki Shoji K.K.), and the like; and the collision-type pulverizers include Atomizer, Pulverizer (both being manufactured by Fuji Paudal Co., Ltd.), and the like.

In addition, the smaller the average particle size of the fine particles of burkeite, the larger the effect of improving the supporting abilities of the particles for supporting a surfactant obtainable by spray-drying in the step (b). From this viewpoint, the average particle size of the fine particles is preferably 40 μm or less, more preferably 35 μm or less, still more preferably 30 μm or less, still more preferably 25 μm or less, especially preferably 20 μm or less, more especially preferably 15 μm or less, particularly preferably 10 μm or less. Here, the average particle size is determined by the following method.

One-thousand grams of ethanol is weighed and placed into a 1-L stainless beaker, and stirred in a thermostat at 20°C with rotating agitation impellers with 3 propeller wings of 2 × 4 cm at a speed of 200 r/min. Subsequently, 20 g of the fine particles mentioned above are supplied. The particle size distribution at a point of measuring for 10 minutes is determined in the same manner as described above by using the above-mentioned in-line type particle monitoring system, manufactured by LASENTEC (TSUB-TEC M100). Here, a median code (particle size at which the cumulative value of the number of particles is 50%) is referred to as an average particle size.

4-1-5. Step (V) Wet Pulverization of Preparation Liquid

The method for exhibiting the same effect as in the case where the fine burkeite is precipitated in the preparation liquid has been studied. As a result, a method comprising subjecting the preparation liquid to wet pulverization has been found. By the method comprising subjecting the preparation liquid to wet pulverization, coarse burkeite, in which the sodium carbonate particles are formed as a core, in the preparation liquid, can be made fine, and the fine burkeite can be made further finer. The preparation liquid before wet pulverization may be prepared by a known process, and the acrylic polymer, and sodium carbonate and sodium sulfate may be added in any order. When a water-insoluble substance is formulated, the water-insoluble substance may be formulated before subjecting the preparation liquid to wet pulverization, or it may be formulated after subjecting the preparation liquid to wet pulverization. From the viewpoint of uniform dispersion by disintegrating the aggregated mass of the water-insoluble substance, it is preferable to formulate before the wet pulverization. For instance, the calcium exchange speed of the crystalline aluminosilicate, which is a water-insoluble substance, can be improved by its formulation before wet pulverization.

In addition, the finer the burkeite which is contained in the preparation liquid is pulverized, the larger the effect

of improving the supporting abilities of the particles for supporting a surfactant obtainable after the spray-drying in the step (b).

Burkeite can be utilized in the formation of supporting sites in the particles for supports obtainable in the subsequent spray-drying process by pulverizing burkeite existing in the preparation liquid with the wet pulverization of the preparation liquid. For instance, when burkeite is formed in the preparation liquid obtained by formulating an acrylic polymer and sodium sulfate and thereafter formulating sodium carbonate, a majority of the burkeite exists as coarse particles formed on the surface of sodium carbonate added. The burkeite substantially cannot contribute to the formation of the supporting sites in the particles for supports when such coarse particles exist. By making the particles fine by wet pulverization, it can be effectively utilized in the formation of the supporting sites in the particles for supports, whereby the supporting abilities of the particles are improved.

The pulverizers may be any ones, as long as they are generally known wet pulverizers. The usually employed wet pulverizers include (i) devices in which fine pulverization is carried out by utilizing pulverization media; and (ii) devices in which fine pulverization is carried out with a gap between a pulverization blade and a stator.

The device (i) includes a device in which pulverization is carried out with a shearing force caused by the difference between the flow rates of the media by supplying a solution to be treated from the bottom of the vessel, and discharging the solution to be treated from the top of the vessel, with stirring the media inside the vertical cylindrical vessel with agitation impellers and an agitation disc. Such continuous process-type devices include a sand grinder (manufactured by Igarashi Kikai Seizo K.K.), and a universal mill (manufactured by K.K. Mitsui Miike Seisakusho); and batch process-type devices include AQUAMIZER (manufactured by Hosokawa Micron Corporation). Horizontal continuous process-type devices having a similar structure include DYNOMILL (manufactured by WAB). Also included are those comprising a cylindrical rotor and an annular casing enveloping it, in which pulverization of a solution to be treated fed from the bottom center of a rotor is carried out by high-speed rotation force of the media, including DIAMOND FINE MILL (manufactured by Mitsubishi Heavy Industries, Ltd.), and KOBOL MILL (manufactured by Shinko Pantec Co., Ltd.).

The device (ii) includes those comprising a rotor and a stator each having grinding teeth, in which pulverization is carried out by repeatedly applying a shearing force when the solution to be treated is passed through the gap, including Colloid Mill (manufactured by Shinko Pantec Co., Ltd.), and Trigonal (manufactured by Mitsui Miike Machinery Co., Ltd.). Included are those having a similar grinding mechanism, except that a rotor and a stator is a grinding stone, including Glo-Mill (manufactured by K.K. Glo Engineering), Maskoroider (manufactured by Masuko Sangyo K.K.), and Corandom Mill (manufactured by Shinko Pantec Co., Ltd.). Also included is one in which the solution to be treated is roughly pulverized with a first turbine and a stator, and the roughly pulverized mixture is then finely pulverized with a second rotor and a stator, including Homomix Line Mill (manufactured by Tokushu KiKa Kogyo K.K.). Further included is one in which a dispersion effect of the level of high-pressure homogenizer can be attained by applying to the liquid a strong impact of the order of megahertz with a wet-type emulsification disperser having all of the functions of emulsification and dispersion, homogenous mixing, and finely powdering by a rotator having a peculiar shape and being high-speed rotated and a stator which is engaged therewith, including CABITRON (manufactured by PACIFIC MACHINERY & ENGINEERING Co., Ltd.).

5. Properties of Particles for Supporting Surfactant

The bulk density of the particles for supports of the present invention is preferably from 300 to 1000 g/L, more preferably from 350 to 800 g/L, still more preferably from 400 to 700 g/L, especially preferably from 450 to 600 g/L, from the viewpoint of securing the supporting capacity for the liquid surfactant composition and the viewpoint of securing the bulk density after supporting the liquid surfactant composition.

In addition, from the viewpoints of generation of fine powder dusts and dissolubility when using a detergent composition comprising detergent particles comprising particles for supports and a liquid surfactant composition supported therein, the average particle size of the particles for supports is preferably from 140 to 600 μm, more preferably from 160 to 500 μm, still more preferably from 180 to 400 μm.

The lower the water content of the particles for supports as determined by an infrared moisture meter, the better, from the viewpoint of making the supporting capacity for the liquid surfactant composition of the particles larger. The water content is preferably 14% by weight or less, more preferably 10% by weight or less, still more preferably 6% by weight or less, most preferably 2% by weight or less.

Incidentally, the bulk density, the average particle size and the water content described above can be determined by the method described under the method for determining properties described below.

6. Composition and Properties of Detergent Particles

The detergent particles of the present invention comprise the particles for supports mentioned above and a

surfactant composition supported therein.

In the surfactant composition, an anionic surfactant and a nonionic surfactant can be each used alone, and it is more preferable to use both surfactants in admixture. Especially in a case of using a nonionic surfactant having a melting point of 30°C or less, it is preferable to use it in combination with a water-soluble nonionic organic compound (hereinafter referred to as "melting point-elevating agent") having a melting point of from 45° to 100°C and a molecular weight of from 1000 to 30000, or an aqueous solution thereof, which has a function of elevating a melting point of this nonionic surfactant. Here, the melting point-elevating agent which can be used in the present invention includes, for instance, polyethylene glycols, polypropylene glycols, and the like. In addition, an amphoteric surfactant or a cationic surfactant can be also used in combination therewith in accordance with its purpose. Also, since an anionic surfactant such as an alkylbenzenesulfonate is formulated in the detergent particles in an amount of from 5 to 25% by weight, an effect of improving the dispersibility of the detergent particles in low-temperature water is exhibited.

As the surfactant composition, there can be used, for instance, one or more kinds selected from the group consisting of anionic surfactants, nonionic surfactants, cationic surfactants and amphoteric surfactants. The anionic surfactants are exemplified by alkylbenzenesulfonates; alkyl ether or alkenyl ether sulfates; á-olefinsulfonates; salts of á-sulfonated fatty acids or esters thereof; alkyl ether or alkenyl ether carboxylates, amino acid-type surfactants; N-acyl amino acid-type surfactants, and the like. Especially included are linear alkylbenzenesulfonates of which alkyl moiety has 10 to 14 carbon atoms; and alkyl sulfates or alkyl ether sulfates, of which each alkyl moiety has 10 to 18 carbon atoms. The counter ions are preferably alkali metals such as sodium and potassium, and amines such as monoethanolamine and diethanolamine.

Further, in order to obtain defoaming effects, a fatty acid salt can be used in combination therewith. The preferable number of carbon atoms of the fatty acid moiety is from 12 to 18.

The nonionic surfactants include polyoxyethylene alkyl or alkenyl ethers, polyoxyethylene alkyl- or alkenylphenyl ethers, polyoxyethylene-polyoxypropylene alkyl or alkenyl ethers, polyoxyethylene-polyoxypropylene glycols as represented by the trade name "pluronic," polyoxyethylene alkylamines, higher fatty acid alkanolamides, alkyl glucosides, alkyl glucosamides, alkylamine oxides, and the like. Among them, those having high hydrophilicity and those having a low forming ability of liquid crystals or having no formation of liquid crystals when mixed with water are preferable, and the polyoxyalkylene alkyl or alkenyl ethers are especially preferable. Preferable are ethylene oxide (hereinafter simply referred to as "EO") adducts of which alcohol moiety has 10 to 18 carbon atoms, preferably 12 to 14 carbon atoms, and an average mole of ethylene oxide of preferably 5 to 30 moles, more preferably 7 to 30 moles, still more preferably 9 to 30 moles, especially preferably 11 to 30 moles. Besides, the EO adducts and propylene oxide (hereinafter simply referred to as "PO") adducts are preferable, each of which alcohol moiety has 8 to 18 carbon atoms. As the order of addition, there can be employed embodiments including an embodiment of adding EO, and thereafter adding PO; an embodiment of adding PO, and thereafter adding EO; or an embodiment of adding randomly EO and PO. Especially preferable order of addition includes an embodiment of adding EO, thereafter adding PO in a block form, and further adding EO in a block form to give a compound represented by the general formula:

$$R\text{-}O\text{-}(EO)_X\text{-}(PO)_Y\text{-}(EO)_Z\text{-}H$$

wherein R is a hydrocarbon group having 8 to 18 carbon atoms, preferably an alkyl group or an alkenyl group; EO is an oxyethylene group; PO is an oxypropylene group; and X, Y and Z are each average moles thereof, among which most preferable average moles have the relations of $X > 0$; $Z > 0$; $X+Y+Z = 6$ to 14; $X+Z = 5$ to 12; and $Y = 1$ to 4.

The cationic surfactants include quaternary ammonium salts such as alkyl trimethyl ammonium salts.

The amphoteric surfactants are exemplified by carbobetain-type and sulfobetain-type surfactants and the like.

The formulation amount of the anionic surfactant is preferably from 0 to 300 parts by weight, more preferably from 20 to 200 parts by weight, especially preferably from 30 to 180 parts by weight, based on 100 parts by weight of the nonionic surfactant. The formulation amount of the melting point-elevating agent of the nonionic surfactant is preferably from 1 to 100 parts by weight, more preferably from 5 to 50 parts by weight, based on 100 parts by weight of the nonionic surfactant. In the above range, the surfactant composition is preferable, because the composition has a temperature range so that the viscosity of the composition at a temperature of a pour point or higher of the composition is adjusted to 10 Pa•s or less, preferably 5 Pa•s or less, especially preferably 2 Pa•s or less, and also has a temperature range so that the penetration hardness of the composition in the temperature range lower than the pour point of the composition and higher than the melting point of the nonionic surfactant is 10 kPa or more, preferably 30 kPa or more, especially preferably 50 kPa or more, whereby the handleability of the composition and the detergent particles during production becomes excellent, and the bleed-out of the nonionic surfactant during storage of the detergent particles can be suppressed.

The values for the properties of the surfactant composition can be determined by the following method. The pour point can be measured by the method according to JIS K 2269. The melting point is determined by using FP800

Thermosystem "Mettler FP81" (manufactured by Mettler Instrumente AG) and heating at a heating rate of 0.2°C/min. The viscosity is obtained by measuring with a B-type viscometer ("DVM-B model" manufactured by TOKYO KEIKI), rotor No. 3 under the condition of 60 r/min. In addition, when the measurement value under the above conditions exceeds 2 Pa•s and becomes not measurable, the viscosity is obtained by measuring with rotor No. 3, under the condition of 12 r/min. The penetration hardness is a value obtained by determining a load when an adaptor is penetrated for 20 mm at a penetration rate of 20 mm/min into an inner portion of the surfactant composition by using a rheometer ("NRM-3002D" manufactured by Fudo Kogyo K.K.) and a disc-shaped adaptor (No. 3, 8ϕ) having a diameter of 8 mm and a bottom area of 0.5 $cm^2$, and dividing the resulting load by the bottom area of the disc-shaped adaptor.

The amount of the surfactant composition is preferably in a range of from 10 to 100 parts by weight, more preferably in a range of from 20 to 80 parts by weight, especially preferably in a range of from 30 to 60 parts by weight, based on 100 parts by weight of the particles for supports, from the viewpoints of the detergency and the dissolubility. The "amount of the surfactant composition" as referred to herein does not include the amount of the surfactant even if the surfactant were added to the preparation liquid.

When the surfactant composition is mixed with the particles for supports, powdery raw materials other than the particles may be added as desired, and the amount thereof is preferably from 0 to 150 parts by weight, based on 100 parts by weight of the particles. The powdery raw materials include, for instance, aluminosilicates, crystalline silicates such as SKS-6 (manufactured by Clariant), and the like.

In addition, the detergent particles can contain the water-soluble polymer, the water-soluble salt, the water-insoluble substance, and other components, each of which is exemplified in the particles for supports as components other than the above-mentioned surfactant composition. In a case where a water-insoluble substance is used, the crystalline silicates described below and the like can be also contained.

Here, when the detergent particles are prepared by using components such as a surfactant which can serve as a binder, and powdery raw materials, the detergent particles are coated with an aggregated layer formed by the above components, so that there may be some cases where the properties and the like of the particles for supports cannot be confirmed simply from their external appearance. One method of confirming the properties and the like of the particles for supports in such cases includes a method of confirming the properties by extracting an organic solvent-soluble component from the detergent particles, thereby separating the particles for supports. Also, the kinds of the organic solvents used in extraction are appropriately selected depending upon the kinds of the binder substances bound to each constituent unit of the detergent particle.

The method for confirmation of the properties and the like of the particles for supporting a surfactant by solvent extraction will be illustrated hereinbelow.

Fifteen grams of the detergent particles which are accurately sample-reduced and weighed are subjected to reflux operation for 1 hour with 300 mL of 95% ethanol heated in a water bath. Thereafter, an ethanol-insoluble component is gradually filtered off by means of suction filtration with sufficiently washing with hot ethanol. The separated ethanol-insoluble component is dried for 24 hours under reduced pressure, and thereafter the insoluble component is cautiously collected so as not to disintegrate the particle structure of the insoluble component. Such an operation is carried out several times, to obtain 100 g of an ethanol-insoluble component. The resulting ethanol-insoluble component is vibrated for 10 minutes with standard sieves according to JIS Z 8801. Thereafter, the weight on each sieve is measured, and the particle classified in accordance with each sieve-opening mentioned above is observed and analyzed, to confirm whether or not the resulting particles are the particles for supports of the present invention, and to confirm the absence or presence of an ethanol-insoluble component added in subsequent steps. In a case where the ethanol-insoluble component added to the particles for supports in subsequent steps is confirmed in the separated ethanol-insoluble component, the average particle size of the particles for supports is obtained by eliminating the factors influencing the particle size distribution by the subsequent steps of addition. Specifically, the separation operation of the solvent-insoluble component is carried out by a properly selected solvent, or a combination thereof, so that the properties and the like of the particles for supports can be confirmed after removing the surfactant composition and the components added in the subsequent steps.

The preferable properties of the detergent particles according to the present invention are as follows.

The bulk density is preferably from 500 to 1000 g/L, more preferably from 600 to 1000 g/L, especially preferably from 650 to 850 g/L.

The average particle size is preferably from 150 to 500 μm, more preferably from 180 to 400 μm.

7. Process for Preparing Detergent Particles

A preferable process for preparing detergent particles comprises the following step (I), and it may further comprise step (II) as occasion demands.

Step (I): mixing a surfactant composition with the particles for supporting a surfactant obtained in the process of the present invention, under condition that the surfactant composition is in a liquid state.

Step (II): mixing the mixture obtained in step (I) with a surface coating agent, thereby coating the surface of the powder detergent particles with the surface coating agent, provided that there is also included a case where step (II) proceeds simultaneously with the disintegration.

< Step (I) >

A process for supporting a surfactant composition in the particles for supports includes, for instance, a process comprising mixing the particles for supports with a surfactant composition by using a mixer for a batch process or continuous process. In the case of mixing by a batch process, as a process of supplying to a mixer, there may be employed such processes as (1) a process comprising previously supplying particles for supports in a mixer, and thereafter adding thereto a surfactant composition; (2) a process comprising supplying particles for supports and a surfactant composition in the mixer in small amounts at a time; (3) a process comprising supplying a part of particles for supports in a mixer, and thereafter supplying the remaining particles for supports and a surfactant composition in the mixer in small amounts at a time, and the like.

Among the surfactant compositions, those which are present as solids or pasty states even if heated within a practical temperature range, for instance, from 50° to 90°C, are previously dispersed or dissolved in a nonionic surfactant having low viscosity, an aqueous solution of a nonionic surfactant, or water, to prepare a liquid mixture or aqueous solution of a surfactant composition, to be added to the particles for supports in the form of a liquid mixture or aqueous solution. By this process, those surfactant compositions which are present as solids or pasty form can be easily added to the particles for supports. The mixing ratio of the surfactant composition having a low viscosity or water to the solid or pasty surfactant composition is preferably such that the resulting liquid mixture or aqueous solution has a viscosity range of which is sprayable.

The process for preparing the above liquid mixture includes, for instance, a process for mixing by supplying a solid or pasty surfactant composition to a surfactant having a low viscosity or water; or a process for preparing a liquid mixture of a surfactant composition by neutralizing an acid precursor of a surfactant, for instance, an acid precursor of an anionic surfactant, with an alkalizing agent, for instance, an aqueous sodium hydroxide or an aqueous potassium hydroxide, in a surfactant having a low viscosity or water.

Also, in this step, an acid precursor of an anionic surfactant can be added before adding a surfactant composition, simultaneously with adding a surfactant composition, in the course of adding a surfactant composition, or after adding a surfactant composition. By adding the acid precursor of an anionic surfactant, there can be achieved improvements in properties and quality, such as high concentration of the surfactants, supporting abilities of particles for supports, control for the supporting abilities thereof, and suppression of bleed-out of the nonionic surfactant and the flowability of the resulting detergent particles.

The acid precursor of an anionic surfactant which can be used in the present invention includes, for instance, alkylbenzenesulfonic acids, alkyl ether or alkenyl ether sulfuric acids, alkyl- or alkenylsulfuric acids, α-olefinsulfonic acids, α-sulfonated fatty acids, alkyl ether or alkenyl ether carboxylic acids, fatty acids, and the like. It is especially preferable that the fatty acid is added after adding the surfactant, from the viewpoint of improvement in the flowability of the detergent particles.

The amount of the acid precursor of an anionic surfactant used is preferably from 0.5 to 30 parts by weight, more preferably from 1 to 20 parts by weight, still more preferably from 1 to 10 parts by weight, especially preferably from 1 to 5 parts by weight, based on 100 parts by weight of the particles for supports. Here, the amount of the acid precursor used is not counted as the amount of the surfactant composition in the present invention. In addition, as the process for adding the acid precursor of an anionic surfactant, it is preferable that those in a liquid state at an ordinary temperature are supplied by spraying, and that those in a solid state at an ordinary temperature may be added as a powder, or they may be supplied by spraying after melting the solid. Here, in a case of adding the acid precursor as a powder, it is preferable that the temperature of the detergent particles in the mixer is raised to a temperature at which the powder melts.

Preferable mixers are concretely as follows. In a case of mixing by a batch process, those of (1) to (3) are preferable: (1) Henschel Mixer (manufactured by Mitsui Miike Machinery Co., Ltd.); High-Speed Mixer (Fukae Powtec Corp.); Vertical Granulator (manufactured by Powrex Corp.); Lödige Mixer (manufactured by Matsuzaka Giken Co., Ltd.); PLOUGH SHARE Mixer (manufactured by PACIFIC MACHINERY & ENGINEERING Co., LTD.); mixers disclosed in Japanese Patent Laid-Open Nos. Hei 10-296064 and Hei 10-296065, and the like; (2) Ribbon Mixer (manufactured by Nichiwa Kikai Kogyo K.K.); Batch Kneader (manufactured by Satake Kagaku Kikai Kogyo K.K.); Ribocone (manufactured by K.K. Okawahara Seisakusho), and the like; (3) Nauta Mixer (manufactured by Hosokawa Micron Corp.), SV Mixer (Shinko Pantec Co., Ltd.), and the like. Among the above-mentioned mixers, preferable are Lödige Mixer, PLOUGH SHARE Mixer, and the mixers disclosed in Japanese Patent Laid-Open Nos. Hei 10-296064 and Hei 10-296065, and the like. Since step (II) described below can be carried out by the same mixer, these mixers are preferable from the viewpoint of simplification of equipments. Especially, the mixers disclosed in Japanese Patent Laid-Open Nos. Hei 10-296064 and Hei 10-296065 are preferable, because the moisture and temperature of the mixture can be regulated by aeration, whereby the disintegration of the particles for supporting a surfactant can be suppressed. In addition, mixers, such as Nauta Mixer, SV Mixer and Ribbon Mixer, which are capable of mixing powders with liquids without applying a strong shearing force, are preferable from the viewpoint that the disintegration of the particles for supporting a surfactant can be suppressed.

Also, the particles for supports may be mixed with a surfactant composition by using the above-mentioned continuous process-type mixer. Also, the continuous process-type mixer other than those listed above includes Flexo Mix (manufactured by Powrex Corp.), Turbulizer (manufactured by Hosokawa Micron Corporation), and the like.

In addition, in this step, when a nonionic surfactant is used, it is preferable that a water-soluble nonionic organic compound (hereinafter referred to as "melting point-elevating agent") having a melting point of from 45° to 100°C and a molecular weight of from 1000 to 30000, or an aqueous solution thereof, which has a function of elevating a melting point of this nonionic surfactant, is added before adding a surfactant composition, simultaneously with adding a surfactant composition, in the course of adding a surfactant composition, or after adding a surfactant composition, or previously mixed with a surfactant composition. By adding the melting point-elevating agent, the caking property of the detergent particles and the bleed-out property of the surfactants in the detergent particles can be suppressed. Here, the same ones as those exemplified in the melting point-elevating agent in the composition of the detergent particles described above can be used. The amount of the melting point-elevating agent used is preferably from 0.5 to 8 parts by weight, more preferably from 0.5 to 5 parts by weight, most preferably from 1 to 3 parts by weight, based on 100 parts by weight of the particles for supports. The above range is preferable from the viewpoints of the suppression of the aggregation between particles, the fast dissolubility, and the suppression of the bleed-out property and the caking property, each property of which is owned by the detergent particle contained in the detergent particles. A process for adding the melting point-elevating agent, comprising adding by previously mixing the melting point-elevating agent with a surfactant by an arbitrary process, or a process comprising adding a surfactant, and thereafter adding the melting point-elevating agent, is advantageous for the suppression of the bleed-out property and the caking property of the detergent particles.

As to the temperature within the mixer in this step, it is more preferable that mixing is carried out by heating to a temperature equal to or higher than the pour point of the surfactant composition. Incidentally, the pour point of the surfactant composition is measured according to the method of JIS K 2269. Here, the temperature to be heated may be a temperature higher than the pour point of the surfactant composition added in order to promote the support of the surfactant composition, and the practical temperature range is preferably from a temperature exceeding a pour point to a temperature higher than the pour point by 50°C, more preferably a temperature higher than the pour point by 10° to 30°C. In addition, in the case where an acid precursor of an anionic surfactant is added in this step, it is more preferable to mix the components after heating to a temperature at which the acid precursor of an anionic surfactant can react.

The mixing time in a batch process and the average residence time in the mixing in a continuous process for obtaining the suitable detergent particles are preferably from 1 to 20 minutes, more preferably from 2 to 10 minutes.

In addition, in the case where an aqueous solution of a surfactant or an aqueous solution of a water-soluble nonionic organic compound is added, a step of drying excess water contents during mixing and/or after mixing may be included.

A powdery surfactant and/or a powdery builder can also be added before adding a surfactant composition, simultaneously with adding a surfactant composition, in the course of adding a surfactant composition, or after adding a surfactant composition. By adding the powdery builder, the particle size of the detergent particles can be controlled, and an improvement in detergency can be achieved. Especially in the case where the acid precursor of an anionic surfactant is added, it is effective to add a powdery builder showing alkaline property prior to adding the acid precursor, from the viewpoint of accelerating the neutralization reaction. Incidentally, the term "powdery builder" mentioned herein refers to an agent for enhancing detergency other than surfactants which is in a powdery form, concretely, including base materials showing metal ion capturing ability, such as zeolite and citrates; base materials showing alkalizing ability, such as sodium carbonate and potassium carbonate; base materials having both metal ion capturing ability and alkalizing ability, such as crystalline silicates; other base materials enhancing ionic strength, such as sodium sulfate; and the like.

Here, as crystalline silicates, those described in Japanese Patent Laid-Open No. Hei 5-279013, column 3, line 17 (especially, those prepared by a process comprising calcinating and crystallizing at a temperature of from 500° to 1000°C being preferable); Japanese Patent Laid-Open No. Hei 7-89712, column 2, line 45; and Japanese Patent Laid-Open No. Sho 60-227895, page 2, lower right column, line 18 (especially the silicates in Table 2 being preferable) can be used as powdery builders. Here, the alkali metal silicates having an $SiO_2/M_2O$ ratio, wherein M is an alkali metal, of from 0.5 to 3.2, preferably from 1.5 to 2.6, are favorably used.

The amount of the powdery builder used is preferably from 0.5 to 12 parts by weight, more preferably from 1 to 6 parts by weight, based on 100 parts by weight of the particles for supports. When the amount of the powdery

builder for detergents used is in the above range, those having an excellent fast dissolubility are obtained.

Further, subsequent to step (I), it is preferable to add step (II) comprising surface-modifying the detergent particles.

< Step (II) >

In the present invention, in order to modify the particle surface of the detergent particles by which the surfactant is supported in step (I), the embodiments for addition may include a process comprising one or more steps of the step (II) comprising adding various surface coating agents such as (1) fine powder, and (2) a liquid material.

Since the flowability and the anti-caking property of the detergent particles tend to improve by coating the particle surface of the detergent particles of the present invention, it is preferable to include a surface-modifying step. The devices used in step (II) are preferably those equipped with both agitation blades and disintegration blades among the mixers exemplified in step (I). Each of the surface coating agents will be explained below.

(1) Fine Powder

As the fine powder, it is preferable that the average particle size of its primary particle is 10 μm or less, more preferably from 0.1 to 10 μm. When the particle size is in the above range, it is favorable from the viewpoints of the improvements in the coating ratio of the particle surface of the detergent particles, and improvements in the flowability and the anti-caking property of the detergent particles. The average particle size of the fine powder can be measured by a method utilizing light scattering by, for instance, a particle analyzer (manufactured by Horiba, LTD.), or it may be measured by a microscopic observation or the like. In addition, it is preferable that the fine powder has a high ion exchange capacity or a high alkalizing ability from the aspect of detergency.

The fine powder is desirably aluminosilicates, which may be crystalline or amorphous. Besides them, fine powders of sodium sulfate, calcium silicate, silicon dioxide, bentonite, talc, clay, amorphous silica derivatives, silicate compounds such as crystalline silicate compounds, and the like are preferable. In addition, there can be also similarly used a metal soap of which primary particles have a size of 0.1 to 10 μm, a powdery surfactant (for instance, alkylsulfates, and the like), or a water-soluble organic salt. In addition, when the crystalline silicate compound is used, it is preferably used in admixture with fine powder other than the crystalline silicate compound for the purpose of preventing deterioration owing to aggregation of the crystalline silicate compounds by moisture absorption and carbon dioxide absorption, and the like.

The amount of the fine powder used is preferably from 0.5 to 40 parts by weight, more preferably from 1 to 30 parts by weight, especially preferably from 2 to 20 parts by weight, based on 100 parts by weight of the detergent particles. When the amount of the fine powder used is in the above range, the flowability is improved, thereby giving a good sense of feel to consumers.

(2) Liquid Materials

The liquid materials include water-soluble polymers, fatty acids, and the like, which may be added in the form of aqueous solutions and molten states.

(2-1) Water-Soluble Polymer

The water-soluble polymer includes carboxymethyl celluloses, polyethylene glycols, polycarboxylates such as polyacrylic acid or a salt thereof and copolymers of acrylic acid and maleic acid and salts thereof, and the like. The amount of the water-soluble polymer used is preferably from 0.5 to 10 parts by weight, more preferably from 1 to 8 parts by weight, especially preferably from 2 to 6 parts by weight, based on 100 parts by weight of the detergent particles. When the amount of the water-soluble polymer used is in the above range, the detergent particles exhibiting excellent dissolubility and excellent flowability and anti-caking properties can be obtained.

(2-2) Fatty Acid

The fatty acid includes, for instance, fatty acids having 10 to 22 carbon atoms, and the like. The amount of the fatty acid used is preferably from 0.5 to 5 parts by weight, especially preferably from 0.5 to 3 parts by weight, based on 100 parts by weight of the detergent particles. In a case of a fatty acid in a solid state at ordinary temperature, it is preferable that the fatty acid is heated to a temperature exhibiting flowability, and then supplied to the detergent particles by spraying.

8. Detergent Composition

The detergent composition in the present invention is a composition comprising the detergent particles described above, and the composition further comprises separately added detergent components other than the detergent particles (for instance, builder particles, fluorescent dyes, enzymes, perfumes, defoaming agents, bleaching agents, bleaching activators, and the like).

The content of the detergent particles in the detergent composition is preferably 50% by weight or more, more preferably 60% by weight or more, still more preferably 70% by weight or more, still more preferably 80% by weight or more, and 100% by weight or less, from the viewpoint of the detergency.

The content of the detergent components other than the detergent particles in the detergent composition is preferably 50% by weight or less, more preferably 40% by weight or less, still more preferably 30% by weight or less, especially preferably 20% by weight or less.

9. Properties of Detergent Composition

The preferable properties of the detergent composition according to the present invention are as follows.

The average particle size is preferably from 150 to 500 µm, more preferably from 180 to 400 µm.

The bulk density is preferably from 500 to 1000 g/L, more preferably from 600 to 1000 g/L, especially preferably from 650 to 850 g/L.

10. Process for Preparing Detergent Composition

The process for preparing a detergent composition is not particularly limited, and an example thereof include a process of mixing the detergent particles and separately added detergent components. Since the detergent composition obtained in the manner described above comprises a detergent particle having a large supporting capacity of the surfactant, sufficient detergent effects can be exhibited even with a small amount. The application of such a detergent composition is not particularly limited, as long as it is applied to powder detergent, including, for instance, laundry powder detergents, detergents for automatic dishwashers, and the like.

11. Method for Measurement of Properties

The values for the properties in the present specification are measured by the following methods.
(Bulk Density): measured by a method according to JIS K 3362.
(Average Particle Size): measured using sieves according to JIS Z 8801. For example, nine-step sieves each having a sieve-opening of 2000 µm, 1400 µm, 1000 µm, 710 µm, 500 µm, 355 µm, 250 µm, 180 µm, and 125 µm, and a receiving tray are used, and the sieves and the receiving tray are attached to a rotating and tapping shaker machine (manufactured by HEIKO SEISAKUSHO, tapping: 156 times/min, rolling: 290 times/min). A 100 g sample is vibrated for 10 minutes to be classified. Thereafter, the mass base frequency is sequentially cumulated for each of sieve-on particles in the order of the receiving tray, and sieves having a sieve-opening of 125 µm, 180 µm, 250 µm, 355 µm, 500 µm, 710 µm, 1000 µm, 1400 µm, and 2000 µm. When a sieve-opening of a first sieve of which cumulative mass base frequency is 50% or more is defined as $\alpha$ µm, and a sieve-opening of one sieve-opening larger than $\alpha$ µm is defined as $\beta$ µm, in the case where the cumulative mass base frequency from the receiving tray to the $\alpha$ µm-sieve is defined as $\gamma$%, and the mass base frequency of particles on the $\alpha$ µm-sieve is defined as $\theta$%, the average particle size can be calculated according to the following equation:

$$(\text{Average particle size}) = 10^{A}:$$

wherein

$$A = \frac{50-\left(\gamma-\frac{\theta}{\log\beta-\log\alpha}\times\log\beta\right)}{\frac{\theta}{\log\beta-\log\alpha}}$$

(Particle Strength): A cylindrical vessel of an inner diameter of 3 cm and a height of 8 cm is charged with 20 g of a sample, and the sample-containing vessel (manufactured by Tsutsui Rikagaku Kikai K.K., "Model TVP1" tapping-type

close-packed bulk density measurement device; tapping conditions: period 36 times/minute, free flow from a height of 60 mm) is tapped for 30 times. The sample height (an initial sample height) at that time is measured. Thereafter, an entire upper surface of the sample kept in the vessel is pressed at a rate of 10 mm/min with a pressing machine to take measurements for a load-displacement curve. The slope of the linear portion at a displacement rate of 5% or less is multiplied by an initial sample height, and the resulting product is divided by a pressed area, to give a quotient which is defined as particle strength.

(Water Content): The water content of the particles is measured by infrared moisture meter method. Specifically, a 3 g sample is weighed and placed on a weighing dish of a known weight, and the sample is heated and dried for 3 minutes with an infrared moisture meter (manufactured by Kett Kagaku Kenkyujo K.K. (infrared ray lamp: 185 W)). After drying, the dried sample and the weighing dish are weighed. The water content in the sample is calculated by taking the difference in the weights of the container and the sample before and after drying obtained by the above operation, dividing the difference with the weight of the sample weighed, and multiplying the results with 100.

(Microporous Capacity Distribution): The microporous capacity of the particles for supporting a surfactant is determined as follows by using mercury porosimeter, "manufactured by SHIMADZU CORPORATION, Poresizer 9320") in accordance with its instruction manual. Specifically, a cell is charged with particles for supporting a surfactant and the pressed mercury is measured separately for a low-pressure portion (0 to 14.2 psia) and a high-pressure portion (14.2 to 30000 psia). The leveling of the measurement data is carried out by taking a moving average of two each to obtain a mode diameter of 0.01 to 3 μm and a microporous capacity of 0.01 to 3 μm.

(Flowability): The flow time refers to a time period required for flowing 100 mL of detergent powder from a hopper used in a measurement of bulk density as defined in JIS K 3362.

(Supporting Capacity of Liquid Surfactant Composition): A cylindrical mixing vessel of an inner diameter of 5 cm and a height of 15 cm which is equipped with agitation impellers in the inner portion thereof is charged with 100 g of the particles. With stirring the contents at 350 rpm, a polyoxyethylene alkyl ether ($C_{12}/C_{14}$ = 6/4 (molar ratio); EO = 7.7; melting point: 25°C) is added dropwise at 30°C at a rate of 10 mL/min, and the change of agitation torque with the passage of time is measured. A value obtained by dividing the amount of the polyoxyethylene alkyl ether supplied at a point where the agitation torque reaches the highest level by the weight (100 g) of the particles is defined as the supporting capacity (mL/g) of the particles.

(Bleed-Out Property): An open-top carton having dimensions of 10 cm in length, 6 cm in width, and 4 cm in height is made out of a Model No. 2 filter paper defined by JIS P 3801 (for instance, qualitative No. 2 filter paper, manufactured by Toyo Roshi K.K.). A line with a width of 0.5 to 1.0 mm is diagonally drawn on the bottom surface of the carton, which is the surface of the packed sample, using a Magic Marker (manufactured by K.K. UCHIDA YOKO, "Magic Ink M700-T1"). A 100 g sample is packed in this carton, and an acrylic resin plate and a lead plate (or an iron plate) with a total weight of 15 g + 250 g are placed on the sample. The carton is placed in a moisture-proof carton, and allowed to stand in a thermostat kept at a temperature of 30°C. After 7 days, the bleed-out property was evaluated by visually examining the degree of blur of the Magic Marker. The evaluation criteria are as follows.

Rank 5: Blurred width of the Magic Marker being 2 cm or more.
Rank 4: Blurred width of the Magic Marker being 1 cm or more.
Rank 3: Blurred width of the Magic Marker being 0.5 cm or more.
Rank 2: Slight blur of the Magic Marker being found.
Rank 1: No blur of the Magic Marker being found.

(Detergency of Detergent): An artificial soil solution having the following compositions is smeared to a cloth to prepare an artificially stained cloth. The smearing of the artificial soil solution to a cloth is carried out in accordance with Japanese Patent Laid-Open No. Hei 7-270395 wherein the artificial soil solution is printed on a cloth. The process for smearing the artificial soil solution to a cloth to prepare an artificially stained cloth is carried out under the conditions of a cell capacity of a gravure roll of 58 $cm^3/cm^2$, a coating speed of 1.0 m/min, a drying temperature of 100°C, and a drying time of one minute. As to the cloths, #2003 calico (manufactured by Tanigashira Shoten) is used.

The composition of the artificial soil solution is lauric acid: 0.44% by weight, myristic acid: 3.09% by weight, pentadecanoic acid: 2.31% by weight, palmitic acid: 6.18% by weight, heptadecanoic acid: 0.44% by weight, stearic acid: 1.57% by weight, oleic acid: 7.75% by weight, triolein: 13.06% by weight, n-hexadecyl palmitate: 2.18% by weight, squalene: 6.53% by weight, lecithin, from egg yolk: 1.94% by weight, Kanuma red clay: 8.11% by weight, carbon black: 0.01% by weight, and tap water: balance.

In addition, the evaluation of the deterging performance is carried out by the following method. The amount 2.2 kg of clothes (underwear and dress shirt in a proportion of 8/2 by weight ratio) and 10 pieces of the artificially stained cloths of 10 cm x 10 cm sewn on to 3 pieces of cotton support cloths of 35 cm x 30 cm are evenly placed in a washing machine "AISAIGO NA-F70AP" manufactured by Matsushita Electric Industrial Co., Ltd. Twenty-two grams of a sample to be evaluated is placed on the clothes in an aggregated state, and water is poured thereto such that the

water does not directly hit the samples. The washing is carried out under the standard course. The washing conditions are as follows.

Washing course: standard course; detergent concentration: 0.067% by weight; water for washing: hard water having 71.2 mg $CaCO_3$/L, wherein a molar ratio of Ca/Mg is 7/3; water temperature: 20°C; liquor ratio: 15 L/kg.

The detergency is evaluated by measuring the reflectance at 550 nm of the unstained cloth and those of the stained cloth before and after washing by an automatic recording colorimeter (manufactured by Shimadzu Corporation), and the detergency is calculated by the following equation. The average value determined of 10 pieces is expressed as the detergency. Incidentally, A represents reflectance after washing, B represents reflectance before washing, and C represents reflectance of unstained cloth.

$$\text{Detergency (\%)} = (A - B)/(C - B) \times 100$$

The present invention will be more concretely explained below by means of the examples, but the present invention is not limited to the examples.

In the present experiment examples, the following raw materials were used unless otherwise specified.

Sodium sulfate: anhydrous neutral sodium sulfate (manufactured by Shikoku Kasei K.K.)

Sodium sulfite: sodium sulfite (manufactured by MITSUI CHEMICALS, INC.)

Fluorescent dye: Tinopal CBS-X (manufactured by Ciba Specialty Chemicals)

Sodium carbonate: DENSE ASH (average particle size: 290 μm; manufactured by Central Glass Co., Ltd.)

Sodium chloride: roast salt S (manufactured by Nippon Seien K.K.)

Crystalline sodium aluminosilicate (zeolite): ZEOBUILDER (4A type; average particle size: 3.5 μm) (manufactured by ZEOBUILDER Ltd.)

Polyoxyethylene alkyl ether: EMULGEN 108 KM (average moles of ethylene oxides: 8.5; number of carbon atoms in alkyl moiety: 12 to 14; manufactured by Kao Corporation)

Polyethylene glycol: K-PEG 6000 (weight-average molecular weight: 8500; manufactured by Kao Corporation)

Experiment Example 1

A mixing vessel equipped with a jacket and an agitator was charged with 453 parts by weight of water. After the water temperature reached 37°C, 110 parts by weight of sodium sulfate, 5 parts by weight of sodium sulfite, and 2 parts by weight of a fluorescent dye were added thereto, and the resulting mixture was agitated for 10 minutes. One-hundred and twenty-five parts by weight of sodium carbonate were added to the mixture, and 175 parts by weight of the aqueous solution of the acrylate polymer described below were added thereto. The resulting mixture was agitated for 10 minutes. Forty parts by weight of sodium chloride were added as a crystal-precipitating agent, and the resulting mixture was agitated for 60 minutes. Further, 143 parts by weight of zeolite were added, and the resulting mixture was agitated for 30 minutes, to give a preparation liquid. Incidentally, the water content of this preparation liquid was 53% by weight, and the final temperature of this preparation liquid was 50°C.

As the above-mentioned aqueous solution of the acrylate polymer, the aqueous solution of the sodium polyacrylate prepared according to the following method was used.

The aqueous solution of the sodium polyacrylate was prepared according to the method described in Examples of Japanese Examined Patent Publication No. Hei 2-24283. The reaction was carried out by feeding an aqueous solution of sodium acrylate having a neutralization degree of 95% and a concentration of 37.7% by weight at a rate of 3.11 kg/h, and feeding an aqueous solution of sodium hydrogensulfite having a concentration of 35% by weight at a rate of 0.13 kg/h, at an average temperature of the jacket of 20°C with an air feeding rate of 3 $m^3$/h. One-thousand parts by weight of the resulting aqueous solution of the sodium acrylate polymer were charged, and a 48% by weight aqueous sodium hydroxide was added thereto, to adjust its pH to 12. The pH-adjusted aqueous solution of the sodium acrylate polymer was kept at 40°C, and 8.57 parts by weight of a 35% by weight aqueous hydrogen peroxide (in such a rate that hydrogen peroxide was 3000 mg/kg based on the charged aqueous solution of the sodium acrylate polymer) were added dropwise. The resulting mixture was agitated at 40°C for 24 hours. Subsequently, 5.54 parts by weight of

a 35% by weight aqueous solution of sodium hydrogensulfite was added in order to remove the remaining hydrogen peroxide, and the resulting mixture was further agitated at 40°C for 24 hours, to give the desired aqueous solution of the acrylate polymer (solid ingredient: 40% by weight). The weight-average molecular weight of the resulting Acrylate Polymer 1 was 10000. This sodium polyacrylate was prepared under mild conditions, by realizing low-temperature conditions of 20°C by employing a redox polymerization method. In addition, the property values of Acrylate Polymer 1 were determined. As a result, the particle size of the larger particle size side at which the height of the peak corresponding to a particle size range covering a particle size of 10 nm attenuates to a half of the maximum value in the light-scattering determination was 21.3 nm; the proportion of the particles having a particle size exceeding 800 nm was 24.7%; the relative half width in the HPLC determination was 1.68; the adsorption ratio to burkeite was 9.6%; the branching coefficient was 0.0; the dispersing ability of the dirt particles was 0.83; the calcium ion capturing ability was 211 mg $CaCO_3$/g; and the stability constant to calcium ion was 3.2. In addition, the methoquinone content in the 40% by weight aqueous solution of the acrylate polymer was determined, and as a result, no methoquinone was detected.

Samples were taken from the preparation liquid after 10 minutes from the addition of the aqueous solution of the acrylate polymer (before the addition of sodium chloride) and the preparation liquid after 60 minutes from the addition of sodium chloride (before the addition of zeolite), and the number of particles and the particle size distribution were determined by TSUB-TEC M100. The number of particles in the preparation liquid before the addition of sodium chloride was 503 /s, and the average particle size (on a number basis) was 65.3 μm. The number of particles in the preparation liquid after 60 minutes from the addition of sodium chloride was 6021 /s, and the average particle size was 35.7 μm. From these determination results, the number of the water-soluble salts was increased by 5518 /s by the addition of sodium chloride, and the average particle size of the increased burkeite was 27.5 μm.

The preparation liquid was fed to a spray-drying tower (countercurrent flow type) by a pump, and sprayed from a pressure-spray nozzle attached near the top of the tower at a spraying-pressure of 2.5 MPa. The high-temperature gas to be fed to the spray-drying tower was fed at a temperature of 218°C from the bottom of the tower, and exhausted at 100°C from the top of the tower. The water content of the resulting Particles 1 for Supporting Surfactant was 1% by weight.

The composition and the property values of Particles 1 for Supporting Surfactant are shown in Table 1 (in the table, the term "Particles for Supporting Surfactant" is abbreviated as "Particles"). The hue of the resulting Particles 1 for Supporting Surfactant was Especially Excellent. Here, the hue was visually examined and evaluated by the following criteria:

Especially Excellent: No pink-colored particles are confirmed.
Excellent: Very little portion of particles is confirmed to be slightly pink-colored.
Pink-Colored: Evidently pink-colored particles are confirmed.

Detergent Particles 1 were prepared using Particles 1 for Supporting Surfactant by the method shown below. To 21 parts by weight of polyoxyethylene alkyl ether under mixing at 80°C were added 1.6 parts by weight of polyethylene glycol, palmitic acid (LUNAC P-95, manufactured by Kao Corporation) in an amount corresponding to 4 parts by weight of sodium palmitate, an alkylbenzenesulfonic acid precursor (NEOPELEX GS, manufactured by Kao Corporation) corresponding to 25 parts by weight of a sodium alkylbenzenesulfonate, and an aqueous sodium hydroxide, thereby preparing a water-containing surfactant composition having a water content of 11% by weight.

Next, 100 parts by weight of the resulting Particles 1 for Supporting Surfactant were supplied into a Lödige Mixer (manufactured by Matsuzaka Giken Co., Ltd.; capacity: 130 L; equipped with a jacket), and the agitation of a main shaft (agitation impellers; rotational speed: 60 rpm; peripheral speed: 1.6 m/s) was started. Incidentally, hot water at 80°C was allowed to flow through the jacket at 10 L/minute. Fifty-eight parts by weight of the above-mentioned surfactant composition were supplied into the above mixer in 2 minutes, and thereafter the resulting mixture was agitated for 5 minutes. Further, 22 parts by weight of a crystalline sodium silicate (a product (average particle size: 8 μm) prepared by pulverizing the crystalline sodium silicate (manufactured by Clariant-Tokuyama K.K., average particle size: 120 μm) with a roller mill), and 12 parts by weight, as the minimum amount, in which the bleed-out property of the detergent particles is evaluated as 1, of a zeolite were supplied thereinto. The agitations of the main shaft (rotational speed: 120 rpm; peripheral speed: 3.1 m/s) and a chopper (rotational speed: 3600 rpm; peripheral speed: 28 m/s) were carried out for 1 minute, and Detergent Particles 1-1 were discharged. Here, it means that the smaller the minimum amount, in which the bleed-out property of the detergent particles is evaluated as 1, of a zeolite, the more excellent the supporting ability of the particles for supporting surfactant in the liquid composition.

The composition and the property values of Detergent Particles 1-1 are shown in Table 2 (in the table, the term "Detergent Particles" is abbreviated to "Particles").

In addition, the deterging performance of the above Detergent Particles 1-1 was evaluated. The results are shown in Tables 2 and 3.

Experiment Example 2

A preparation liquid was obtained in the same manner as in Experiment Example 1. As the aqueous solution of the acrylate polymer, the aqueous solution of sodium polyacrylate prepared according to the following method was used.

The amount 80.3 kg of water and 0.54 g (1.94 mmol) of ferrous sulfate heptahydrate were supplied, and heated to 100°C. While keeping the temperature at 100°C, 190 kg (2.1 kmol) of an 80% by weight aqueous solution of acrylic acid and 3.9 kg (48.6 mol) of a 98% by weight aqueous solution of 2-mercaptoethanol were added dropwise at a constant rate over a period of 5 hours, and 5.0 kg (6.3 mol) of a 30% by weight aqueous sodium persulfate was added dropwise at a constant rate over a period of 6 hours, to carry out polymerization. At the point of the termination of the dropwise addition of monomer, 15.7 kg (161.3 mol) of a 35% aqueous hydrogen peroxide was added dropwise over 1 hour for deodorization. Further, the resulting mixture was matured for 4 hours, and cooled. One-hundred and sixty-seven kilograms (2 kmol) of a 48% by weight aqueous sodium hydroxide was added thereto at an internal temperature of 40°C or lower, and thereafter 5.7 kg (19.2 mol) of a 35% by weight aqueous sodium hydrogensulfite was added as a reducing agent, and the resulting mixture was reacted for 1 hour. Subsequently, water was added for the purpose of concentration adjustment, to give a desired aqueous solution of the acrylate polymer (solid ingredient: 40% by weight). The weight-average molecular weight of the resulting Acrylate Polymer 2 was 10000. This sodium polyacrylate was prepared under mild conditions by using 2-mercaptoethanol, which is a chain-transfer agent, thereby controlling the amount of the aqueous sodium persulfate, which is an initiator, even though the preparation was carried out at a temperature of 100°C.

In addition, the property values of Acrylate Polymer 2 were determined. As a result, the particle size of the larger particle size side at which the height of the peak corresponding to a particle size range covering a particle size of 10 nm attenuates to a half of the maximum value in the light-scattering determination was 17.1 nm; the proportion of the particles having a particle size exceeding 800 nm was 0%; the relative half width in the HPLC determination was 1.55; the adsorption ratio to burkeite was 6.5%; the branching coefficient was 3.9; the dispersing ability of the dirt particles was 0.82; the calcium ion capturing ability was 213 mg $CaCO_3$/g; and the stability constant to calcium ion was 3.3. In addition, the methoquinone content in the aqueous solution of the acrylate polymer was determined, and as a result, no methoquinone was detected.

Samples were taken from the preparation liquid after 10 minutes from the addition of the aqueous solution of the acrylate polymer (before the addition of sodium chloride) and the preparation liquid after 60 minutes from the addition of sodium chloride (before the addition of zeolite), and the number of particles and the particle size distribution were determined by TSUB-TEC M100. The number of particles in the preparation liquid before the addition of sodium chloride was 1375 /s, and the average particle size (on a number basis) was 77.0 μm. The number of particles in the preparation liquid after 60 minutes from the addition of sodium chloride was 3550 /s, and the average particle size was 24.5 μm. From these determination results, the number of the water-soluble salts was increased by 2175 /s by the addition of sodium chloride, and the average particle size of the increased burkeite was 11.6 μm.

Particles 2 for Supporting Surfactant were obtained in the same manner as in Experiment Example 1. The composition and the property values of Particles 2 for Supporting Surfactant are shown in Table 1. Incidentally, the hue of Particles 2 for Supporting Surfactant was especially excellent.

Detergent Particles 2-1 were prepared in the same manner as in Experiment Example 1 using Particles 2 for Supporting Surfactant. The amount of zeolite supplied, as the minimum amount in which the bleed-out property of the detergent particles is evaluated as 1, was 12 parts by weight. The composition and the property values of Detergent Particles 2-1 are shown in Table 2.

In addition, the deterging performance of the above Detergent Particles 2-1 was evaluated. The results are shown in Tables 2 and 3.

Experiment Example 3

A preparation liquid was obtained in the same manner as in Experiment Example 1. As the aqueous solution of the acrylate polymer, the aqueous solution of sodium polyacrylate prepared according to the following method was used.

The aqueous solution of the sodium polyacrylate was prepared according to the method described in Examples of Japanese Examined Patent Publication No. Hei 2-24283. The reaction was carried out by feeding an aqueous solution of sodium acrylate having a neutralization degree of 95% and a concentration of 37.7% by weight at a rate of 3.11 kg/h, and feeding an aqueous solution of sodium hydrogensulfite having a concentration of 35% by weight at a rate of 0.13 kg/h, at an average temperature of the jacket of 20°C with an air feeding rate of 3 $m^3$/h. One-thousand parts by weight of the resulting aqueous solution of the sodium acrylate polymer were charged, and 8.57 parts by weight of a 35% by weight aqueous hydrogen peroxide (in such a rate that hydrogen peroxide was 3000 mg/kg based

on the charged aqueous solution of the sodium acrylate polymer) were added dropwise. The resulting mixture was agitated at 40°C for 24 hours. Subsequently, 5.54 parts by weight of a 35% by weight aqueous solution of sodium hydrogensulfite was added in order to remove the remaining hydrogen peroxide, and the resulting mixture was further agitated at 40°C for 24 hours, to give the desired aqueous solution of the acrylate polymer (solid ingredient: 40% by weight). The weight-average molecular weight of the resulting Acrylate Polymer 3 was 10000. This sodium polyacrylate was prepared under mild conditions by realizing low-temperature conditions of 20°C by employing a redox polymerization method. In addition, the property values of Acrylate Polymer 3 were determined. As a result, the particle size of the larger particle size side at which the height of the peak corresponding to a particle size range covering a particle size of 10 nm attenuates to a half of the maximum value in the light-scattering determination was 18.9 nm; the proportion of the particles having a particle size exceeding 800 nm was 16.5%; the relative half width in the HPLC determination was 1.70; the adsorption ratio to burkeite was 9.1%; the branching coefficient was 0.0; the dispersing ability of the dirt particles was 0.83; the calcium ion capturing ability was 212 mg $CaCO_3$/g; and the stability constant to calcium ion was 3.3. In addition, the methoquinone content in the 40% aqueous solution of the acrylate polymer was determined, and as a result, it was found that 6 ppm of methoquinone was contained.

Samples were taken from the preparation liquid after 10 minutes from the addition of the 40% by weight aqueous solution of the acrylate polymer (before the addition of sodium chloride) and the preparation liquid after 60 minutes from the addition of sodium chloride (before the addition of zeolite), and the number of particles and the particle size distribution were determined by TSUB-TEC M100. The number of particles in the preparation liquid before the addition of sodium chloride was 501 /s, and the average particle size (on a number basis) was 65.1 μm. The number of particles in the preparation liquid after 60 minutes from the addition of sodium chloride was 5293 /s, and the average particle size was 34.7 μm. From these determination results; the number of the water-soluble salts was increased by 4792 /s by the addition of sodium chloride, and the average particle size of the increased burkeite was 26.8 μm.

Particles 3 for Supporting Surfactant were obtained in the same manner as in Experiment Example 1. The composition and the property values of Particles 3 for Supporting Surfactant are shown in Table 1. Here, the hue of Particles 3 for Supporting Surfactant was excellent.

Detergent Particles 3-1 were prepared in the same manner as in Experiment Example 1 using Particles 3 for Supporting Surfactant. The amount of zeolite supplied, as the minimum amount in which the bleed-out property of the detergent particles is evaluated as 1, was 12 parts by weight. The composition and the property values of Detergent Particles 3-1 are shown in Table 2.

In addition, the deterging performance of the above Detergent Particles 3-1 was evaluated. The results are shown in Tables 2 and 3.

<u>Experiment Example 4</u>

A preparation liquid was obtained in the same manner as in Experiment Example 1. Here, as the aqueous solution of the sodium polyacrylate, ARON A 20 UN (solid ingredient: 41.3% by weight), manufactured by TOAGOSEI CO., LTD., was used, and the water content of the preparation liquid was adjusted by the amount of water initially supplied in the mixing vessel. The ARON A 20 UN is not used for a general detergent, and used as a pigment dispersant for paper-processing, a dyeing auxiliary aid, and the like.

In addition, the property values of Acrylate Polymer 4 were determined. As a result, the particle size of the larger particle size side at which the height of the peak corresponding to a particle size range covering a particle size of 10 nm attenuates to a half of the maximum value in the light-scattering determination was 16.2 nm; the proportion of the particles having a particle size exceeding 800 nm was 14.8%; the relative half width in the HPLC determination was 1.81; the adsorption ratio to burkeite was 7.4%; the dispersing ability of the dirt particles was 0.82; the calcium ion capturing ability was 207 mg $CaCO_3$/g; and the stability constant to calcium ion was 3.7. In addition, the methoquinone content in the aqueous solution of the acrylate polymer was determined, and as a result, no methoquinone was detected.

Samples were taken from the preparation liquid after 10 minutes from the addition of the aqueous solution of the acrylate polymer (before the addition of sodium chloride) and the preparation liquid after 60 minutes from the addition of sodium chloride (before the addition of zeolite), and the number of particles and the particle size distribution were determined by TSUB-TEC M100. The number of particles in the preparation liquid before the addition of sodium chloride was 625 /s, and the average particle size (on a number basis) was 79.5 μm. The number of particles in the preparation liquid after 60 minutes from the addition of sodium chloride was 2780 /s, and the average particle size was 25.5 μm. From these determination results, the number of the water-soluble salts was increased by 2155 /s by the addition of sodium chloride, and the average particle size of the increased burkeite was 21.0 μm.

Particles 4 for Supporting Surfactant were obtained in the same manner as in Experiment Example 1. The composition and the property values of Particles 4 for Supporting Surfactant are shown in Table 1. Here, the hue of Particles 4 for Supporting Surfactant was especially excellent.

Detergent Particles 4-1 were prepared in the same manner as in Experiment Example 1 using Particles 4 for Supporting Surfactant. The amount of zeolite supplied, as the minimum amount in which the bleed-out property of the detergent particles is evaluated as 1, was 12 parts by weight. The composition and the property values of Detergent Particles 4-1 are shown in Table 2.
In addition, the deterging performance of the above Detergent Particles 4-1 was evaluated. The results are shown in Tables 2 and 3.

Experiment Example 5

A preparation liquid was obtained in the same manner as in Experiment Example 1. As the aqueous solution of the acrylate polymer, the aqueous solution of the sodium polyacrylate prepared according to the following method was used.
The aqueous solution of the sodium polyacrylate was prepared according to the method described in Examples of Japanese Examined Patent Publication No. Hei 2-24283. The reaction was carried out by feeding an aqueous solution of sodium acrylate having a neutralization degree of 95% and a concentration of 37.7% by weight at a rate of 3.11 kg/h, and feeding an aqueous solution of sodium hydrogensulfite having a concentration of 35% by weight at a rate of 0.13 kg/h, at an average temperature of the jacket of 20°C with an air feeding rate of 3 $m^3$/h, to give the desired aqueous solution of the acrylate polymer (solid ingredient: 40% by weight). The weight-average molecular weight of the resulting Acrylate Polymer 5 was 10000. This sodium polyacrylate was prepared under mild conditions by realizing low-temperature conditions of 20°C by employing a redox polymerization method. In addition, the property values of Acrylate Polymer 5 were determined. As a result, the particle size of the larger particle size side at which the height of the peak corresponding to a particle size range covering a particle size of 10 nm attenuates to a half of the maximum value in the light-scattering determination was 16.1 nm; the proportion of the particles having a particle size exceeding 800 nm was 9.3%; the relative half width in the HPLC determination was 1.69; the adsorption ratio to burkeite was 9.3%; the branching coefficient was 0.0; the dispersing ability of the dirt particles was 0.83; the calcium ion capturing ability was 212 mg $CaCO_3$/g; and the stability constant to calcium ion was 3.3. In addition, the methoquinone content in the 40% by weight aqueous solution of the acrylate polymer was determined, and as a result, it was found that 40 ppm of methoquinone was contained.
Samples were taken from the preparation liquid after 10 minutes from the addition of the 40% by weight aqueous solution of the acrylate polymer (before the addition of sodium chloride) and the preparation liquid after 60 minutes from the addition of sodium chloride (before the addition of zeolite), and the number of particles and the particle size distribution were determined by TSUB-TEC M100. The number of particles in the preparation liquid before the addition of sodium chloride was 640 /s, and the average particle size (on a number basis) was 81.1 µm. The number of particles in the preparation liquid after 60 minutes from the addition of sodium chloride was 2459 /s, and the average particle size was 23.6 µm. From these determination results, the number of the water-soluble salts was increased by 1819 /s by the addition of sodium chloride, and the average particle size of the increased burkeite was 14.2 µm.
Particles 5 for Supporting Surfactant were obtained in the same manner as in Experiment Example 1. The composition and the property values of Particles 5 for Supporting Surfactant are shown in Table 1. Here, the hue of Particles 5 for Supporting Surfactant was pink-colored.
Detergent Particles 5-1 were prepared in the same manner as in Experiment Example 1 using Particles 5 for Supporting Surfactant. The amount of zeolite supplied, as the minimum amount in which the bleed-out property of the detergent particles is evaluated as 1, was 12 parts by weight. The composition and the property values of Detergent Particles 5-1 are shown in Table 2.
In addition, the deterging performance of the above Detergent Particles 5-1 was evaluated. The results are shown in Tables 2 and 3.

Experiment Example 6

A preparation liquid was obtained in the same manner as in Experiment Example 1. As the aqueous solution of the acrylate polymer, Sokalan PA-30 CL (solid ingredient: 46.8% by weight), manufactured by BASF, was used, and the water content of the preparation liquid was adjusted by the amount of water initially supplied in the mixing vessel. Here, the Sokalan PA-30 CL is commercially available product for use in a detergent builder, and is used for a general detergent.
In addition, the property values of Acrylate Polymer 6 were determined. As a result, the particle size of the larger particle size side at which the height of the peak corresponding to a particle size range covering a particle size of 10 nm attenuates to a half of the maximum value in the light-scattering determination was 33.7 nm; the proportion of the particles having a particle size exceeding 800 nm was 0%; the relative half width in the HPLC determination was 1.32; the adsorption ratio to burkeite was 2.3%; the branching coefficient was 10; the dispersing ability of the dirt

particles was 0.79; the calcium ion capturing ability was 206 mg $CaCO_3$/g; and the stability constant to calcium ion was 3.8. In addition, the methoquinone content in the 46.8% by weight aqueous solution of the acrylate polymer was determined, and as a result, it was found that 15 ppm of methoquinone was contained.

Samples were taken from the preparation liquid after 10 minutes from the addition of the aqueous solution of the acrylate polymer (before the addition of sodium chloride) and the preparation liquid after 60 minutes from the addition of sodium chloride (before the addition of zeolite), and the number of particles and the particle size distribution were determined by TSUB-TEC M100. The number of particles in the preparation liquid before the addition of sodium chloride was 632 /s, and the average particle size (on a number basis) was 66.5 µm. The number of particles in the preparation liquid after 60 minutes from the addition of sodium chloride was 851 /s, and the average particle size was 67.2 µm. From these determination results, the number of water-soluble salts was increased by 219 /s by the addition of sodium chloride.

Particles 6 for Supporting Surfactant were obtained in the same manner as in Experiment Example 1. The composition and the property values of Particles 6 for Supporting Surfactant are shown in Table 1. Here, the hue of Particles 6 for Supporting Surfactant was Pink-Colored.

Detergent Particles 6-1 were prepared in the same manner as in Experiment Example 1 using Particles 6 for Supporting Surfactant. The amount of zeolite supplied, as the minimum amount in which the bleed-out property of the detergent particles is evaluated as 1, was 52 parts by weight. The composition and the property values as well as the deterging performance of the above Detergent Particles 6-1 are shown in Table 2.

In addition, there were prepared Detergent Particles 6-2 in which the amount of the zeolite was 12 parts by weight, the same as those of Experiment Examples 1 to 5, and the deterging performance was evaluated. The results are shown in Table 3.

<u>Experiment Example 7</u>

A preparation liquid was obtained in the same manner as in Experiment Example 1. As the aqueous solution of the acrylate polymer, the aqueous solution of the sodium salt of the acrylic acid-maleic acid copolymer (solid ingredient: 40% by weight, molar ratio of maleic acid to acrylic acid: 3/7) prepared according to the following method was used.

A polymerization reactor comprised a glass reactor (hereinafter referred to as the reactor) equipped with an agitator, a thermometer, a reflux condenser, inlets for adding dropwise a monomer solution and an initiator solution, and a jacket for heating, the reactor comprising raw material feeding vessels for the monomer solution and the initiator solution (hereinafter also referred to as the monomer feeding vessel and the initiator feeding vessel). The reactor was previously charged with 175 kg of a 40% by weight aqueous solution of a maleate partially neutralized with a 48% by weight aqueous sodium hydroxide at a neutralization degree of 40%, and the monomer feeding vessel was previously charged with 125 kg of an 80% by weight aqueous solution of acrylic acid. In addition, the initiator feeding vessel was charged with 20 kg of a 35% by weight aqueous hydrogen peroxide. Hot water was allowed to flow through the jacket of the reactor so that the polymerization temperature was adjusted to 100° ± 3°C. The 80% by weight aqueous solution of acrylic acid and the 35% by weight aqueous hydrogen peroxide were continuously added dropwise to the reactor through the inlets, and the resulting mixture was agitated. The addition was carried out in 6 hours, and thereafter the resulting mixture was retained for 2 hours. In this case, although heat was slightly generated, the polymerization temperature was maintained at 100° ± 3°C by controlling the hot water allowed to flow through the jacket. A series of these procedures were carried out, to give Acrylate Polymer 7 having a polymerization ratio of acrylic acid and maleic acid of 95% or more and a weight-average molecular weight of 70000. The Acrylate Polymer 7 was treated with a 48% by weight aqueous sodium hydroxide to adjust its pH to 7 and its concentration to 40% by weight, to give an aqueous solution of the sodium salt. This Acrylate Polymer 7 was prepared under vigorous conditions in which a large amount of radicals were generated by using a large amount of an aqueous hydrogen peroxide, and a chain-transfer agent or the like was not used in the preparation. In addition, the property values of Acrylate Polymer 7 were determined. As a result, the particle size of the larger particle size side at which the height of the peak corresponding to a particle size range covering a particle size of 10 nm attenuates to a half of the maximum value in the light-scattering determination was 423.3 nm; the proportion of the particles having a particle size exceeding 800 nm was 29.1%; the adsorption ratio to burkeite was 2.3%; the dispersing ability of the dirt particles was 0.3; the calcium ion capturing ability was 380 mg $CaCO_3$/g; and the stability constant to calcium ion was 4.0. In addition, the methoquinone content in the 40% by weight aqueous solution of the acrylate polymer was determined, and as a result, no methoquinone was detected.

Samples were taken from the preparation liquid after 10 minutes from the addition of the aqueous solution of the acrylate polymer (before the addition of sodium chloride) and the preparation liquid after 60 minutes from the addition of sodium chloride (before the addition of zeolite), and the number of particles and the particle size distribution were determined by TSUB-TEC M100. The number of particles in the preparation liquid before the addition of sodium chloride was 589 /s, and the average particle size (on a number basis) was 65.4 µm. The number of particles in the

preparation liquid after 60 minutes from the addition of sodium chloride was 601 /s, and the average particle size was 65.5 µm. From these determination results, the number of the water-soluble salts was increased by 12/s by the addition of sodium chloride.

Particles 7 for Supporting Surfactant were obtained in the same manner as in Experiment Example 1. The composition and the property values of Particles 7 for Supporting Surfactant are shown in Table 1. Here, the hue of Particles 7 for Supporting Surfactant was especially excellent.

Detergent Particles 7-1 were prepared in the same manner as in Experiment Example 1 using Particles 7 for Supporting Surfactant. The amount of zeolite supplied, as the minimum amount in which the bleed-out property of the detergent particles is evaluated as 1, was 43 parts by weight. The composition and the property values as well as the deterging performance of Detergent Particles 7-1 are shown in Table 2.

In addition, there was prepared Detergent Particles 7-2 in which the amount of the zeolite was 12 parts by weight, the same as those of Experiment Examples 1 to 5, and the deterging performance was evaluated. The results are shown in Table 3.

Table 1

| Properties of Polymer | Experiment Example 1 | Experiment Example 2 | Experiment Example 3 | Experiment Example 4 | Experiment Example 5 | Experiment Example 6 | Experiment Example 7 |
|---|---|---|---|---|---|---|---|
| Weight-Average Molecular Weight (–) | 10000 | 10000 | 10000 | 26000 | 10000 | 8000 | 70000 |
| Particle Size at Attenuation (Light-Scattering) (nm) | 21.3 | 17.1 | 18.9 | 16.2 | 16.1 | 33.7 | 423.3 |
| Proportion of Those Having a Size Exceeding 800 nm (Light-Scattering) (%) | 24.7 | 0 | 16.5 | 14.8 | 9.3 | 0 | 29.1 |
| Adsorption Ratio to Burkeite (%) | 9.6 | 6.5 | 9.1 | 7.4 | 9.3 | 2.3 | 2.3 |
| Dispersing Ability of Slurry Particles (–) | 0.83 | 0.82 | 0.83 | 0.82 | 0.83 | 0.79 | 0.30 |
| Calcium Ion Capturing Ability (mg $CaCO_3$/g) | 211 | 213 | 212 | 207 | 212 | 206 | 380 |
| Stability Constant (–) | 3.2 | 3.3 | 3.3 | 3.7 | 3.3 | 3.8 | 4.0 |
| Methoquinone Content (ppm) | ND | ND | 6 | ND | 40 | 15 | ND |

- continued -

*: ND represents detection limit or less (less than 1 ppm).

- continued -

| Composition of Particles for Supporting Surfactant | Experiment Example 1 | Experiment Example 2 | Experiment Example 3 | Experiment Example 4 | Experiment Example 5 | Experiment Example 6 | Experiment Example 7 |
|---|---|---|---|---|---|---|---|
| | Particles 1 | Particles 2 | Particles 3 | Particles 4 | Particles 5 | Particles 6 | Particles 7 |
| Sodium Sulfate (% by weight) | 22 | 22 | 22 | 22 | 22 | 22 | 22 |
| Sodium Sulfite (% by weight) | 1 | 1 | 1 | 1 | 1 | 1 | 1 |
| Fluorescent Dye (% by weight) | 0.4 | 0.4 | 0.4 | 0.4 | 0.4 | 0.4 | 0.4 |
| Sodium Carbonate (% by weight) | 25 | 25 | 25 | 25 | 25 | 25 | 25 |
| Acrylate Polymer 1 (% by weight) | 14 | – | – | – | – | – | – |
| Acrylate Polymer 2 (% by weight) | – | 14 | – | – | – | – | – |
| Acrylate Polymer 3 (% by weight) | – | – | 14 | – | – | – | – |
| Acrylate Polymer 4 (% by weight) | – | – | – | 14 | – | – | – |
| Acrylate Polymer 5 (% by weight) | – | – | – | – | 14 | – | – |
| Acrylate Polymer 6 (% by weight) | – | – | – | – | – | 14 | – |
| Acrylate Polymer 7 (% by weight) | – | – | – | – | – | – | 14 |
| Sodium Chloride (% by weight) | 8 | 8 | 8 | 8 | 8 | 8 | 8 |
| Zeolite (% by weight) | 28.6 | 28.6 | 28.6 | 28.6 | 28.6 | 28.6 | 28.6 |
| Water (% by weight) | 1 | 1 | 1 | 1 | 1 | 1 | 1 |
| Total (% by weight) | 78 | 78 | 78 | 78 | 78 | 78 | 78 |

- continued -

- continued -

| Properties of Particles | | Experiment Example 1 | Experiment Example 2 | Experiment Example 3 | Experiment Example 4 | Experiment Example 5 | Experiment Example 6 | Experiment Example 7 |
|---|---|---|---|---|---|---|---|---|
| Hue | (–) | Especially Excellent | Especially Excellent | Excellent | Especially Excellent | Pink-Colored | Pink-Colored | Especially Excellent |
| Average Particle Size | (μm) | 255 | 258 | 256 | 245 | 249 | 260 | 244 |
| Bulk Density | (g/L) | 530 | 532 | 528 | 540 | 538 | 555 | 502 |
| Particle Strength | (MPa) | 40 | 39 | 41 | 35 | 40 | 34 | 9 |
| Supporting Capacity | (mL/g) | 0.66 | 0.65 | 0.64 | 0.62 | 0.65 | 0.45 | 0.43 |
| Mode Diameter of Microporous Capacity Distribution | (μm) | 0.6 | 0.6 | 0.5 | 0.6 | 0.5 | 2.2 | 1.8 |
| Microporous Capacity of Those Having a Size of 0.01 – 3 μm | (mL/g) | 0.46 | 0.45 | 0.45 | 0.46 | 0.45 | 0.38 | 0.4 |

Table 2

| Composition of Detergent Particles | | Experiment Example 1 | Experiment Example 2 | Experiment Example 3 | Experiment Example 4 | Experiment Example 5 | Experiment Example 6 | Experiment Example 7 |
|---|---|---|---|---|---|---|---|---|
| | | Particles 1-1 | Particles 2-1 | Particles 3-1 | Particles 4-1 | Particles 5-1 | Particles 6-1 | Particles 7-1 |
| Particles 1 for Supporting Surfactant | (parts by wt.) | 100 | - | - | - | - | - | - |
| Particles 2 for Supporting Surfactant | (parts by wt.) | - | 100 | - | - | - | - | - |
| Particles 3 for Supporting Surfactant | (parts by wt.) | - | - | 100 | - | - | - | - |
| Particles 4 for Supporting Surfactant | (parts by wt.) | - | - | - | 100 | - | - | - |
| Particles 5 for Supporting Surfactant | (parts by wt.) | - | - | - | - | 100 | - | - |
| Particles 6 for Supporting Surfactant | (parts by wt.) | - | - | - | - | - | 100 | - |
| Particles 7 for Supporting Surfactant | (parts by wt.) | - | - | - | - | - | - | 100 |
| Surfactant Composition | (parts by wt.) | 58 | 58 | 58 | 58 | 58 | 58 | 58 |
| (Sodium Alkylbenzenesulfonate) | (parts by wt.) | 25 | 25 | 25 | 25 | 25 | 25 | 25 |
| (Polyoxyethylene Alkyl Ether) | (parts by wt.) | 21 | 21 | 21 | 21 | 21 | 21 | 21 |
| (Polyethylene Glycol) | (parts by wt.) | 1.6 | 1.6 | 1.6 | 1.6 | 1.6 | 1.6 | 1.6 |
| (Sodium Palmitate) | (parts by wt.) | 4 | 4 | 4 | 4 | 4 | 4 | 4 |
| (Water) | (parts by wt.) | 6.4 | 6.4 | 6.4 | 6.4 | 6.4 | 6.4 | 6.4 |
| Crystalline Sodium Silicate | (parts by wt.) | 22 | 22 | 22 | 22 | 22 | 22 | 22 |
| Zeolite | (parts by wt.) | 12 | 12 | 12 | 12 | 12 | 52 | 43 |

- continued -

- continued -

| Properties | | Experiment Example 1 | Experiment Example 2 | Experiment Example 3 | Experiment Example 4 | Experiment Example 5 | Experiment Example 6 | Experiment Example 7 |
|---|---|---|---|---|---|---|---|---|
| Average Particle Size | (μm) | 260 | 261 | 258 | 251 | 258 | 263 | 270 |
| Bulk Density | (g/L) | 745 | 750 | 742 | 756 | 748 | 620 | 615 |
| Flowability | (sec) | 5.8 | 5.7 | 5.7 | 5.8 | 5.7 | 6.2 | 6.5 |
| Bleed-out Property | (–) | 1 | 1 | 1 | 1 | 1 | 1 | 1 |
| Deterging Performance | (%) | 75 | 76 | 75 | 72 | 76 | 51 | 58 |

Table 3

| Composition of Detergent Particles | Experiment Example 1 | Experiment Example 2 | Experiment Example 3 | Experiment Example 4 | Experiment Example 5 | Experiment Example 6 | Experiment Example 7 |
|---|---|---|---|---|---|---|---|
| | Particles 1-1 | Particles 2-1 | Particles 3-1 | Particles 4-1 | Particles 5-1 | Particles 6-2 | Particles 7-2 |
| Particles 1 for Supporting Surfactant (parts by wt.) | 100 | – | – | – | – | – | – |
| Particles 2 for Supporting Surfactant (parts by wt.) | – | 100 | – | – | – | – | – |
| Particles 3 for Supporting Surfactant (parts by wt.) | – | – | 100 | – | – | – | – |
| Particles 4 for Supporting Surfactant (parts by wt.) | – | – | – | 100 | – | – | – |
| Particles 5 for Supporting Surfactant (parts by wt.) | – | – | – | – | 100 | – | – |
| Particles 6 for Supporting Surfactant (parts by wt.) | – | – | – | – | – | 100 | – |
| Particles 7 for Supporting Surfactant (parts by wt.) | – | – | – | – | – | – | 100 |
| Surfactant Composition (parts by wt.) | 58 | 58 | 58 | 58 | 58 | 58 | 58 |
| (Sodium Alkylbenzenesulfonate) (parts by wt.) | 25 | 25 | 25 | 25 | 25 | 25 | 25 |
| (Polyoxyethylene Alkyl Ether) (parts by wt.) | 21 | 21 | 21 | 21 | 21 | 21 | 21 |
| (Polyethylene Glycol) (parts by wt.) | 1.6 | 1.6 | 1.6 | 1.6 | 1.6 | 1.6 | 1.6 |
| (Sodium Palmitate) (parts by wt.) | 4 | 4 | 4 | 4 | 4 | 4 | 4 |
| (Water) (parts by wt.) | 6.4 | 6.4 | 6.4 | 6.4 | 6.4 | 6.4 | 6.4 |
| Crystalline Sodium Silicate (parts by wt.) | 22 | 22 | 22 | 22 | 22 | 22 | 22 |
| Zeolite (parts by wt.) | 12 | 12 | 12 | 12 | 12 | 12 | 12 |

- continued -

- continued -

| Properties | | Experiment Example 1 | Experiment Example 2 | Experiment Example 3 | Experiment Example 4 | Experiment Example 5 | Experiment Example 6 | Experiment Example 7 |
|---|---|---|---|---|---|---|---|---|
| Average Particle Size | (μm) | 260 | 261 | 258 | 251 | 258 | Undeterminable | Undeterminable |
| Bulk Density | (g/L) | 745 | 750 | 742 | 756 | 748 | Undeterminable | Undeterminable |
| Flowability | (sec) | 5.8 | 5.7 | 5.7 | 5.8 | 5.7 | Undeterminable | Undeterminable |
| Bleed-out Property | (–) | 1 | 1 | 1 | 1 | 1 | 5 | 4 |
| Deterging Performance | (%) | 75 | 76 | 75 | 72 | 76 | 68 | 64 |

In the Experiment Examples of the present invention, the burkeite precipitated in the preparation step and the spray-drying step of the preparation liquid becomes fine by using an acrylate polymer having specific properties. Therefore, each group of Particles 1 to 5 for Supporting Surfactant has a smaller mode diameter of microporous capacity distribution and a larger microporous capacity than that of each group of Particles 6 or 7 for Supporting Surfactant, thereby giving a microporous capacity distribution such that the particles for supporting surfactant have a higher supporting ability for a liquid composition. As a result, in each group of the Detergent Particles of the present invention (Detergent Particles 1-1 to 5-1), the required amount of zeolite post-added in order to maintain the quality (anti-bleed-out property) can be considerably reduced (Table 2). In addition, Detergent Particles 1-1 to 5-1 of the present invention can exhibit more excellent deterging performance than Detergent Particles 6-2 or 7-2 of the same zeolite content (Table 3). Incidentally, Detergent Particles 6-2 or 7-2 were formed into aggregates in which the surfactant composition was bled out, so that the dispersion dissolubility was lowered in the evaluation of the deterging performance. In other words, by using Particles 1 to 5 for Supporting Surfactant of the present invention having high supporting ability, there can be obtained detergent particles having higher quality and higher deterging performance than those obtained using Particles 6 or 7 for Supporting Surfactant (both having a particle size of the larger particle size side at which the height of the peak corresponding to a particle size range covering a particle size of 10 nm attenuates to a half of the maximum value in the light-scattering determination exceeding 32 nm). In addition, the detergent particles also having excellent hue can be obtained by using Particles 1 to 4 for Supporting Surfactant.

INDUSTRIAL APPLICABILITY

According to the present invention, there are provided particles for supporting a surfactant having excellent supporting abilities (supporting capacity/supporting strength) of a surfactant composition; detergent particles having high quality and high deterging performance, and further having excellent hue; and a detergent composition comprising the detergent particles.

## Claims

1. A process for preparing particles for supporting a surfactant comprising burkeite, comprising the step of spray-drying a preparation liquid comprising an acrylic polymer, sodium carbonate and sodium sulfate, wherein the acrylic polymer has a weight-average molecular weight of 3000 to 100000, and wherein acrylic polymer has a size distribution, as determined by light scattering determination, such that a particle size of a larger particle size side at which a height of a peak corresponding to a particle size range covering a particle size of 10 nm attenuates to a half of a maximum value is 32 nm or less, and that a proportion of particles having a particle size exceeding 800 nm is 70% or less.

2. The process for preparing particles for supporting a surfactant according to claim 1, wherein the acrylic polymer has a calcium ion capturing ability of 160 mg $CaCO_3$/g or more, and a stability constant to calcium ions of 2.6 or more.

3. The process for preparing particles for supporting a surfactant according to claim 1 or 2, wherein the particles for supporting a surfactant have a composition in that the acrylic polymer is contained in an amount of from 5 to 30% by weight, that a total content of the sodium carbonate and sodium sulfate, as expressed by a weight ratio to the polymer content, of from 19/1 to 1/2, and that sodium carbonate and sodium sulfate are contained in a weight ratio of 1/10 to 10/1.

4. The process for preparing particles for supporting a surfactant according to any one of claims 1 to 3, wherein the acrylic polymer formulated in the preparation liquid is in a form of an aqueous solution having a quinone content of 6 ppm or less.

5. Particles for supporting a surfactant obtainable by the process of any one of claims 1 to 4, wherein the particles for supporting a surfactant have a mode diameter of a microporous capacity distribution of 1.5 μm or less as determined by mercury porosimeter for one having a micropore diameter of from 0.01 to 3 μm, a microporous capacity of 0.3 mL/g or more for one having a micropore diameter of from 0.01 to 3 μm, and a particle strength of from 15 MPa or more.

6. Particles for supporting a surfactant comprising burkeite, wherein an acrylic polymer is contained in an amount of 5 to 30% by weight, wherein the acrylic polymer has a weight-average molecular weight of 3000 to 100000, and

wherein acrylic polymer has a size distribution, as determined by light scattering determination, such that a particle size of a larger particle size side at which a height of a peak corresponding to a particle size range covering a particle size of 10 nm attenuates to a half of a maximum value is 32 nm or less, and that a proportion of particles having a particle size exceeding 800 nm is 70% or less, and wherein sodium carbonate and sodium sulfate are contained in a weight ratio of from 1/10 to 10/1, and wherein a total content of the sodium carbonate and sodium sulfate, as expressed by a weight ratio to the polymer content, of from 19/1 to 1/2.

**7.** The particles for supporting a surfactant according to claim 6, wherein the acrylic polymer has a calcium ion capturing ability of 160 mg $CaCO_3$/g or more, and a stability constant to calcium ions of 2.6 or more.

**8.** Detergent particles comprising 10 to 100 parts by weight of a surfactant composition based on 100 parts by weight of particles for supporting a surfactant of any one of claims 5 to 7, wherein the surfactant composition is supported by the particles for supporting a surfactant.

**9.** A detergent composition having an average particle size of 150 to 500 µm and a bulk density of from 500 to 1000 g/L, comprising the detergent particles of claim 8 in an amount of 50 to 100% by weight.

FIG.1

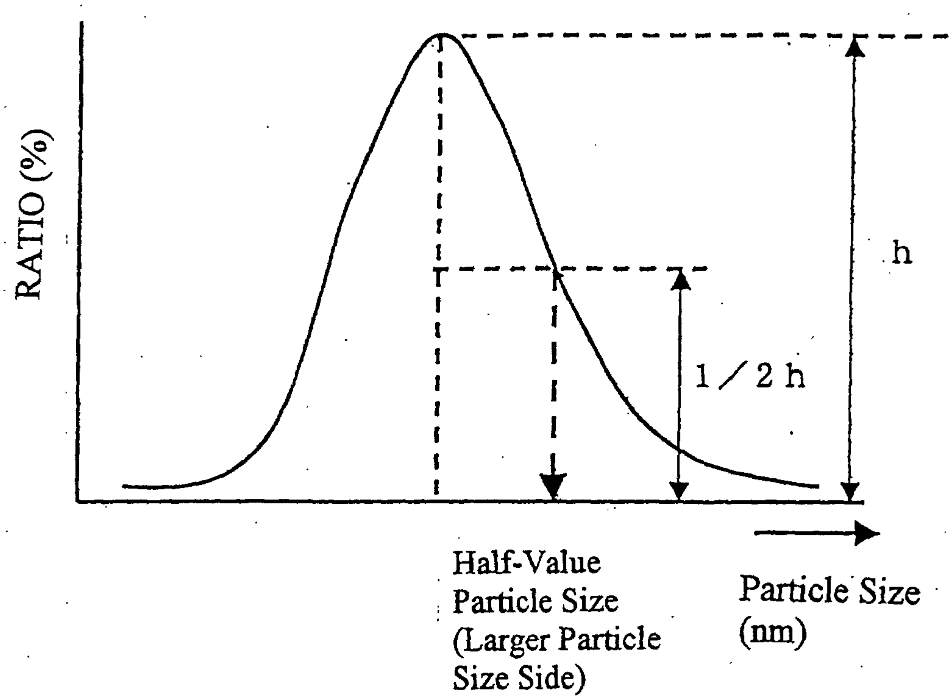
RATIO (%)
h
1／2 h
Half-Value Particle Size (Larger Particle Size Side)
Particle Size (nm)

FIG.2

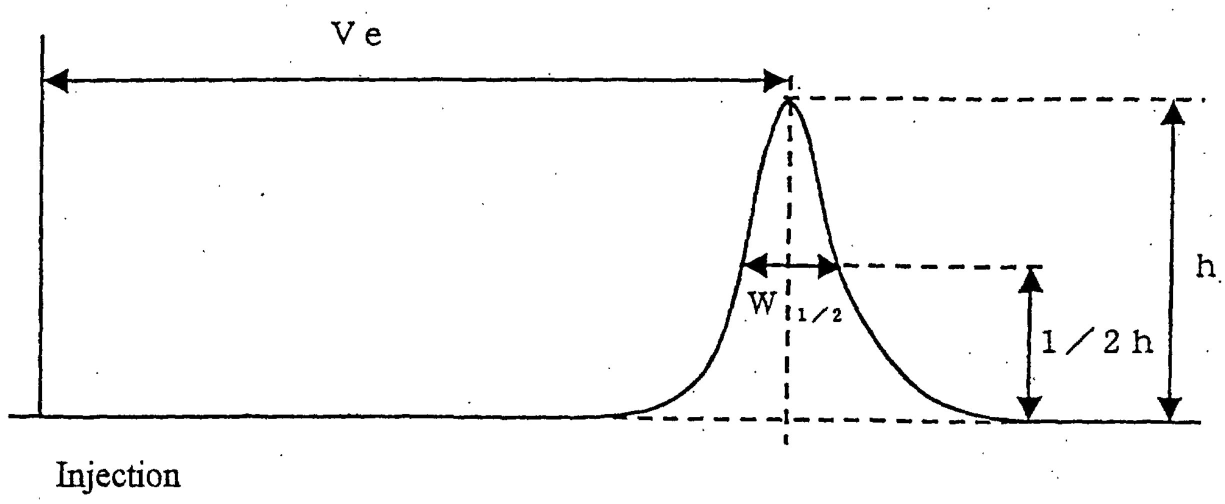
V e
h
W 1／2
1／2 h
Injection

FIG.3

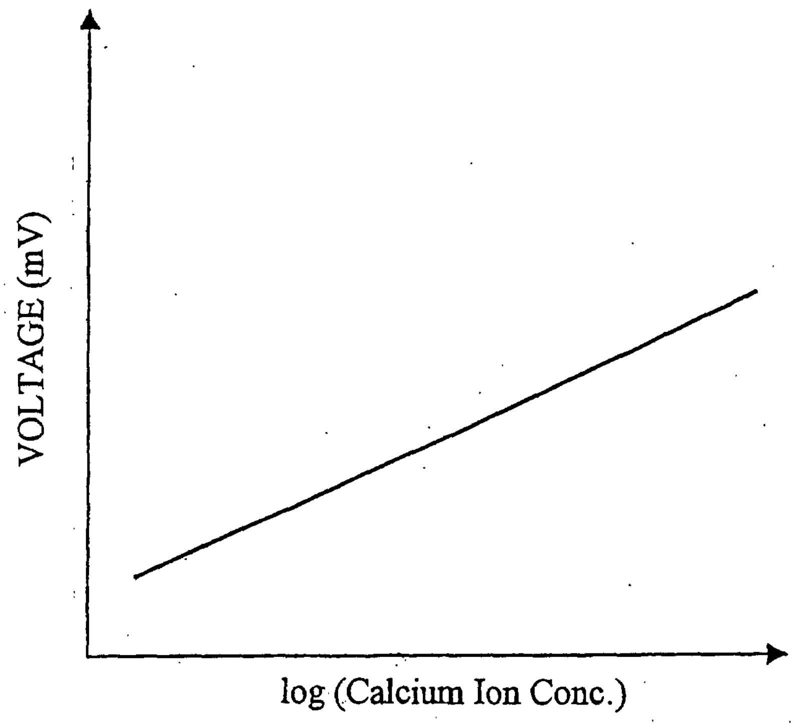
VOLTAGE (mV)
log (Calcium Ion Conc.)

FIG.4

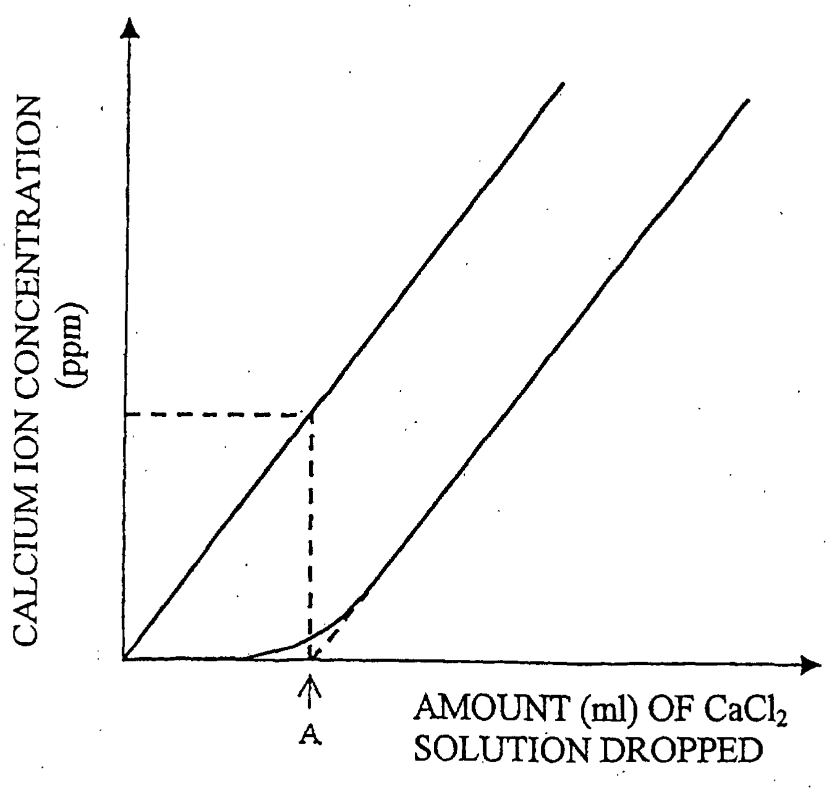
CALCIUM ION CONCENTRATION (ppm)
A
AMOUNT (ml) OF CaCl2
SOLUTION DROPPED

## INTERNATIONAL SEARCH REPORT

International application No.
PCT/JP01/06621

A. CLASSIFICATION OF SUBJECT MATTER
Int.Cl[7] C11D3/04, 3/10, 3/37, 11/00, C08J3/12, 3/14, C08L33/02

According to International Patent Classification (IPC) or to both national classification and IPC

B. FIELDS SEARCHED

Minimum documentation searched (classification system followed by classification symbols)
Int.Cl[7] C11D3/04, 3/10, 3/37, 11/00, C08J3/12, 3/14, C08L33/02

Documentation searched other than minimum documentation to the extent that such documents are included in the fields searched

Electronic data base consulted during the international search (name of data base and, where practicable, search terms used)
JOIS

C. DOCUMENTS CONSIDERED TO BE RELEVANT

| Category* | Citation of document, with indication, where appropriate, of the relevant passages | Relevant to claim No. |
|---|---|---|
| A | EP 266863 A1 (Unilever PLC), 11 May, 1988 (11.05.88), Claims & JP 63-258998 A | 1-9 |
| A | EP 221776 A1 (Unilever PLC), 13 May, 1987 (13.05.87), Claims & US 4900466 A & JP 62-112697 A | 1-9 |
| A | WRIGHT, Paul, "Characterization of Latices Used for Can Coatings by Dynamic Light Scattering", Analytical Proceedings Including Analytical Communications, (1994), Vol.31, No.5, pages 163 to 164 | 1-9 |
| PA | KITORA et al., "GPC/Multi-Detector to Diffusion NMR ni yoru Senzai-chu no Polycarboxylate no Jisonku na Doutei to Teiryou", Dai 5kai Koubunshi Bunseki Touronkai Kouen Youshishuu, November, 2000, pages 87 to 88 | 1-9 |

☒ Further documents are listed in the continuation of Box C. ☐ See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 01 October, 2001 (01.10.01) | 16 October, 2001 (16.10.01) |
| Name and mailing address of the ISA/ Japanese Patent Office | Authorized officer |
| Facsimile No. | Telephone No. |

Form PCT/ISA/210 (second sheet) (July 1992)

## INTERNATIONAL SEARCH REPORT

International application No.
PCT/JP01/06621

C (Continuation). DOCUMENTS CONSIDERED TO BE RELEVANT

| Category* | Citation of document, with indication, where appropriate, of the relevant passages | Relevant to claim No. |
|---|---|---|
| A | Hideo NOGUCHI et al., "Irou-you Ryuujou Senzai-chu no Acrylic-san-kei Suiyou-sei Polymer no Teisei to Teiryou", Yukagaku, (1991), Vol.40, No.12, pages 1100 to 104 | 1-9 |

Form PCT/ISA/210 (continuation of second sheet) (July 1992)